# EUROPEAN PATENT SPECIFICATION

(11) **EP 4 084 507 B1**
(45) Date of publication and mention of the grant of the patent: **11.12.2024**
(21) Application number: 20916063.9
(22) Date of filing: 30.10.2020
(51) Int. Cl.: H04W 4/02, G06Q 30/02, G06Q 30/0242, H04W 4/23

(54) **METHODS AND SYSTEM FOR COMPILING STATISTICS ON EXPOSURE DATA**
VERFAHREN UND SYSTEM ZUM KOMPILIEREN VON STATISTIKEN ÜBER EXPOSITIONSDATEN
PROCÉDÉS ET SYSTÈME DE COMPILATION DE STATISTIQUES RELATIVES À DES DONNÉES D'EXPOSITION

(30) Priority: 21.01.2020 CN 202010072823
(43) Date of publication of application: 02.11.2022
(73) Proprietor: Huawei Technologies Co., Ltd., Shenzhen, Guangdong 518129, (CN)
(72) Inventor: MO, Lan, Shenzhen, Guangdong 518129 (CN)
(74) Representative: Maiwald GmbH
(86) International application number: PCT/CN2020/125411
(87) International publication number: WO 2021/147440

(56) References cited:
- CN-A- 107 798 274
- CN-A- 109 377 288
- US-A1- 2008 140 479
- US-A1- 2018 063 599
- US-A1- 2018 349 948
- US-A1- 2018 349 948
- US-A1- 2020 013 085
- US-B1- 9 961 523

## Description

### TECHNICAL FIELD

Embodiments of this application relate to the communications field and the electronic advertising field, and in particular, to a method for collecting statistics about exposure data and a device.

### BACKGROUND

Electronic advertising (Electronic advertising) is an advertising form in which advertising information is conveyed by using electronic information technologies and electronic media. Playing an electronic advertisement through an electronic billboard installed in public space has become a trend of advertising media. For example, the public space may include places such as an outdoor place (for example, a roadside) and a building (for example, an elevator room).

A brand advertiser may request an advertising platform to deliver an advertisement on the electronic billboard. Specifically, the electronic billboard may receive an advertisement resource of the electronic advertisement delivered by the advertising platform, and then play the electronic advertisement corresponding to the advertisement resource.

It may be understood that, after the electronic advertisement delivered on the electronic billboard is played, the advertising platform needs to collect statistics about exposure data of the electronic advertisement, to analyze an advertising effect of the electronic advertisement. For example, the foregoing exposure data may be analyzed to obtain exposure traffic of the electronic advertisement (that is, a quantity of users who have watched the electronic advertisement), and an audience (that is, a group of people who have watched the electronic advertisement). However, because propagation of the electronic advertisement on the electronic billboard is unidirectional propagation, and interaction with a user is limited, it is difficult to collect statistics about the exposure data of the electronic advertisement, and consequently it is difficult to measure and analyze the advertisement effect.

Currently, feedback information of a user on an electronic advertisement played on an electronic billboard may be collected in a manner of a questionnaire survey through sampling, to collect statistics about exposure data of the electronic advertisement. However, in this manner of the questionnaire survey, samples of the questionnaire survey are incomplete, and the questionnaire survey is excessively dependent on answers of the user in the questionnaire, which affects accuracy and reliability of the exposure data, and further affects accuracy and reliability of advertisement effect analysis.

In a solution, to improve accuracy and reliability of the exposure data, a surveillance camera may be installed on the electronic billboard to monitor users passing through the electronic billboard. The electronic billboard can report surveillance data of the surveillance camera to an advertising platform. The advertising platform may obtain, based on the surveillance data, the exposure data of the electronic advertisement played on the electronic billboard, for example, information such as how many users pass through the electronic billboard and a dwell time period of a user on the electronic billboard.

However, in the non-public service field, the surveillance camera is used to monitor and identify users without users' legal authorization, which may invade user privacy in many countries. Therefore, feasibility of the solution in which the surveillance camera is installed on the electronic billboard is low. In addition, an audience of the electronic advertisement (that is, a specific user who has watched the electronic advertisement) cannot be accurately identified based on the surveillance data of the surveillance camera. That is, accuracy of the exposure data of the electronic advertisement that is obtained through statistics collection based on the surveillance data collected by the surveillance camera is low.
US 2018/0349948 A1 describes a method of evaluating an eflectiveness of a sign includes detecting whether a user is within a selected range of a location of a sign, and based on the user being within the selected range, acquiring a visible image of the user. The method also includes estimating, by a gaze monitoring device, a direction of a gaze of the user, and determining Whether the estimated direction of the gaze is toward the location. The method further includes, based on determining that the gaze is toward the location, performing, by a processing device, estimating an amount of time during which the estimated direction of the gaze is toward the location, and based on the amount of time being greater than or equal to a threshold amount, determining that the user has at least a threshold level of interest in the sign.

### SUMMARY

Embodiments of this application provide a method for collecting statistics about exposure data and a device, so that exposure data of an electronic advertisement played by an advertising device (for example, an electronic billboard) can be obtained through statistics collection without invading user privacy, and accuracy and reliability of the exposure data obtained through statistics collection can be improved. The invention is set out in the appended independent claims. Further embodiments are defined in the appended dependent claims.

### BRIEF DESCRIPTION OF DRAWINGS

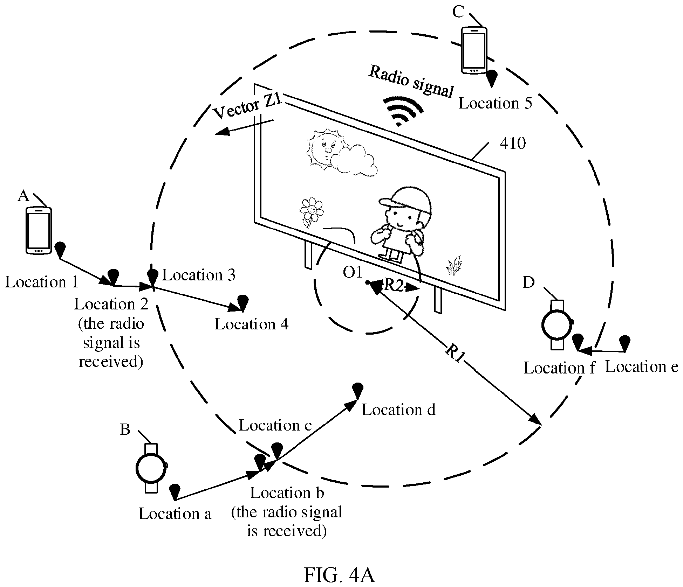

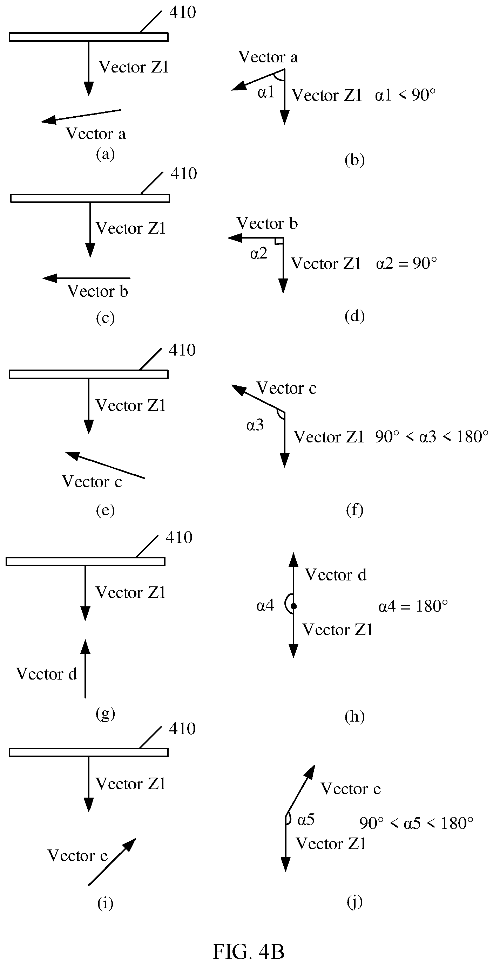

FIG. 1A is a schematic diagram of a system architecture of an advertising system according to an embodiment of this application;
FIG. 1B is a schematic diagram of a system architecture of another advertising system according to an embodiment of this application;
FIG. 2A is a schematic diagram of a hardware structure of a mobile terminal according to an embodiment of this application;
FIG. 2B is a schematic diagram of a hardware structure of an advertising device according to an embodiment of this application;
FIG. 3 is a flowchart of a method for collecting statistics about exposure data according to an embodiment of this application;
FIG. 4A is a schematic diagram of a scenario to which a method is applied according to an embodiment of this application;
   (a), (c), (e), (g), and (i) in FIG. 4B each are a top view of an advertising device in the scenario shown in FIG. 4A, and (b), (d), (f), (h), and (j) in FIG. 4B each are a schematic diagram of an included angle between an orientation of the advertising device and a movement direction of a mobile terminal in the scenario shown in FIG. 4A;

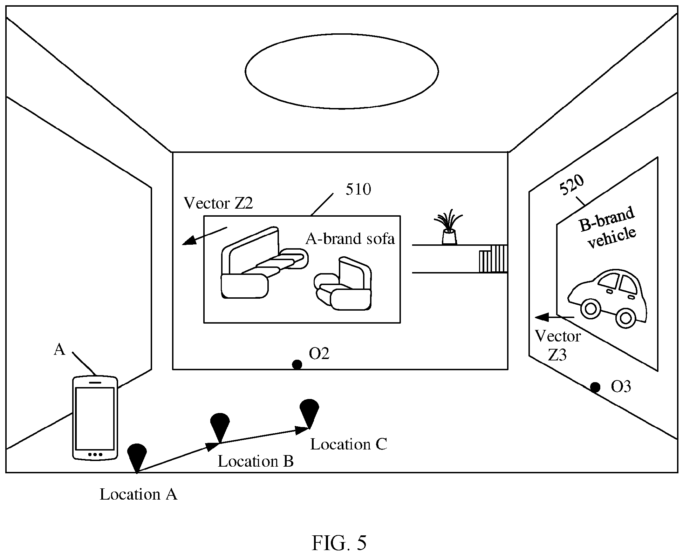

FIG. 5 is a schematic diagram of another scenario to which a method is applied according to an embodiment of this application;

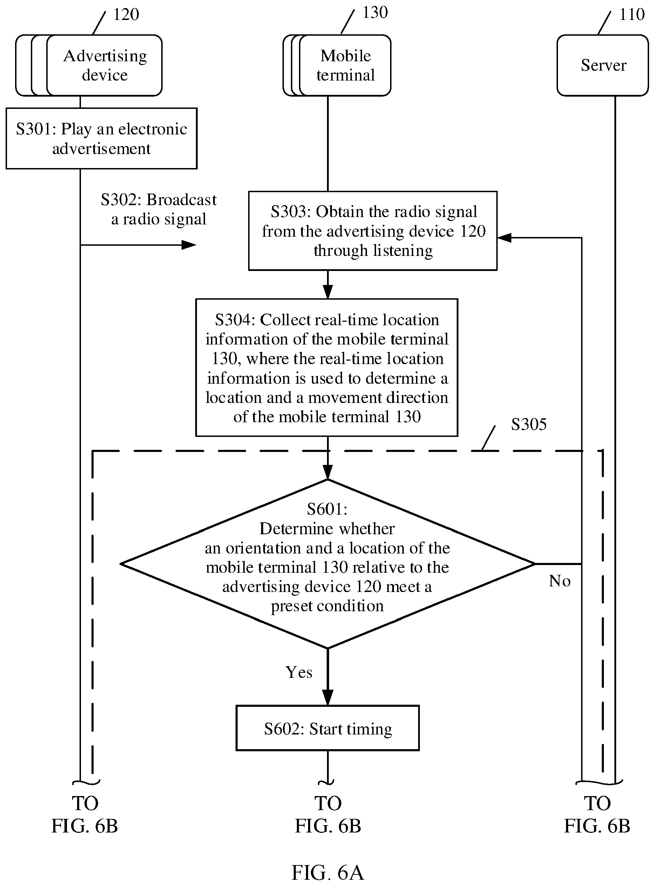

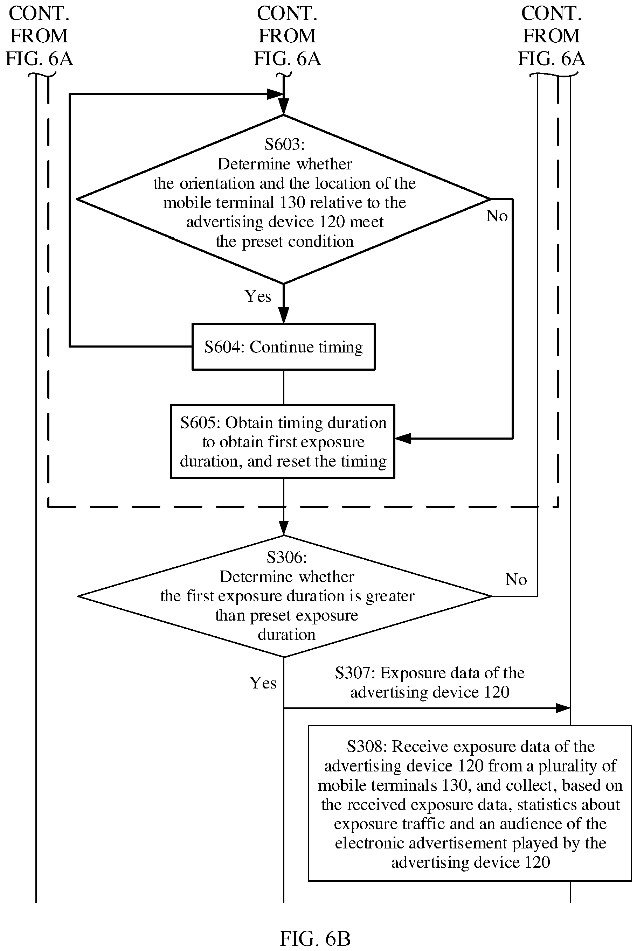

FIG. 6A and FIG. 6B are a flowchart of another method for collecting statistics about exposure data according to an embodiment of this application;

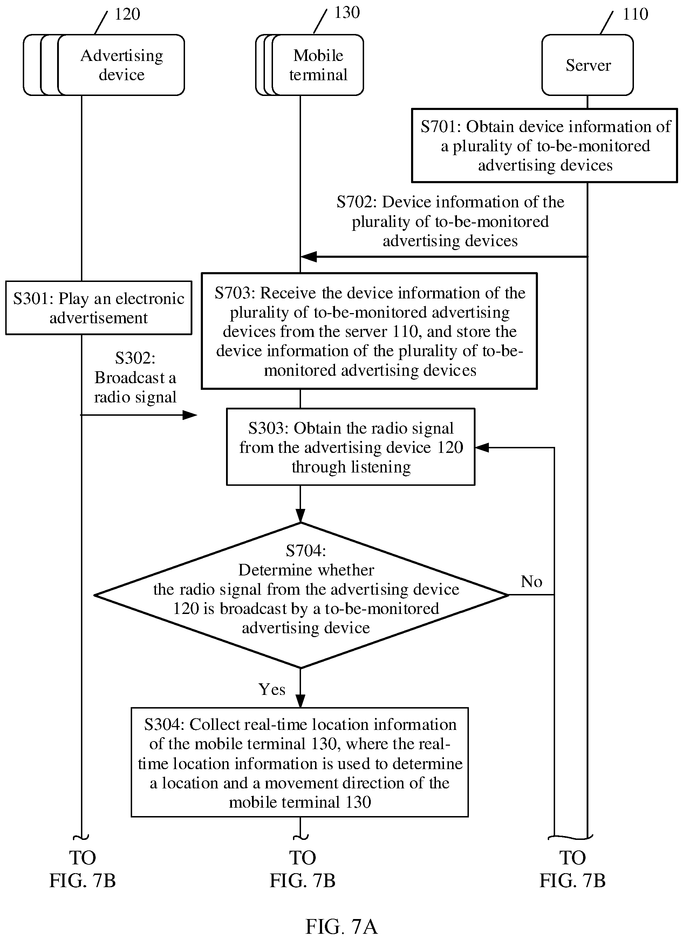

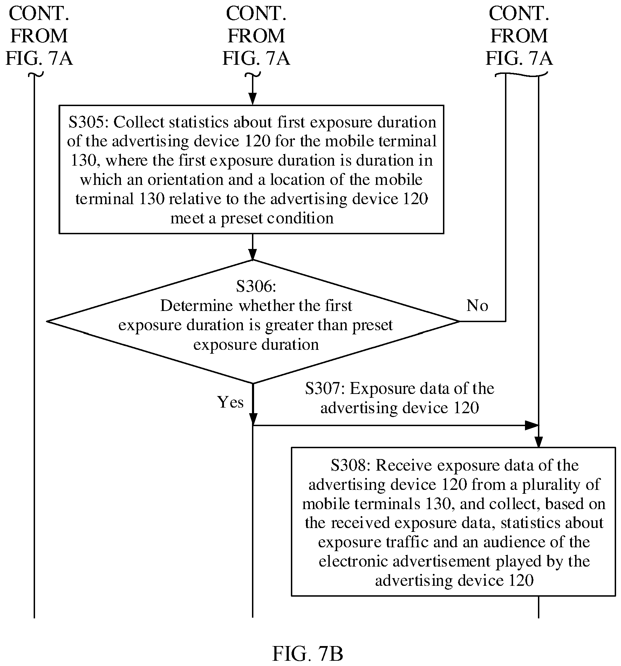

FIG. 7A and FIG. 7B are a flowchart of another method for collecting statistics about exposure data according to an embodiment of this application;

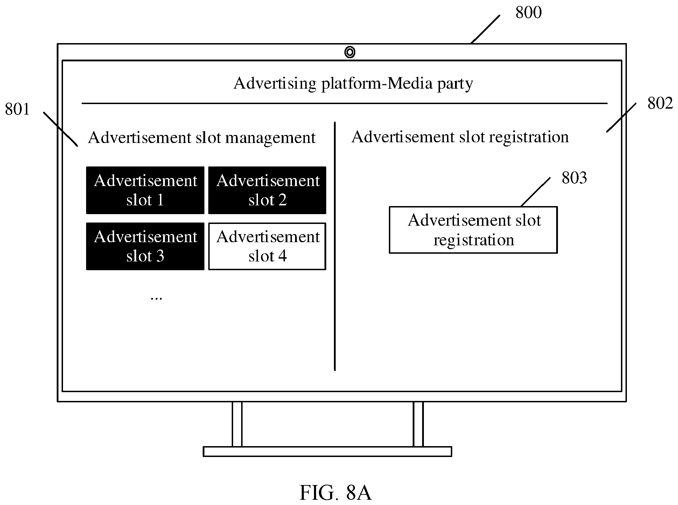

FIG. 8A is a schematic diagram of a terminal display interface of a media party according to an embodiment of this application;

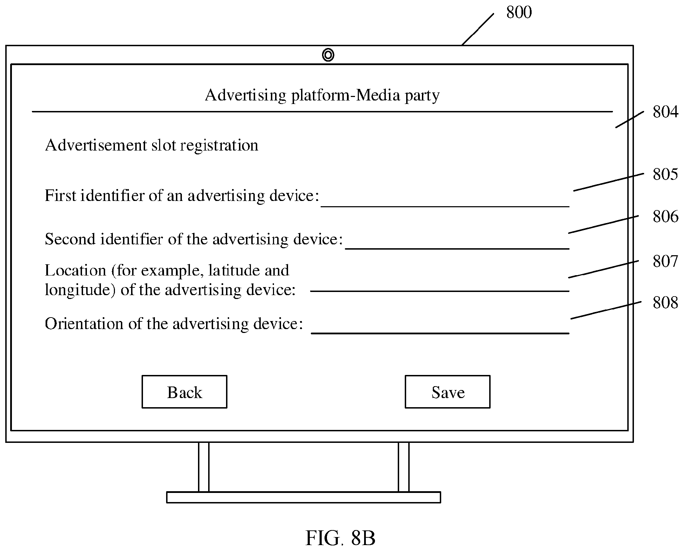

FIG. 8B is a schematic diagram of another terminal display interface of a media party according to an embodiment of this application;

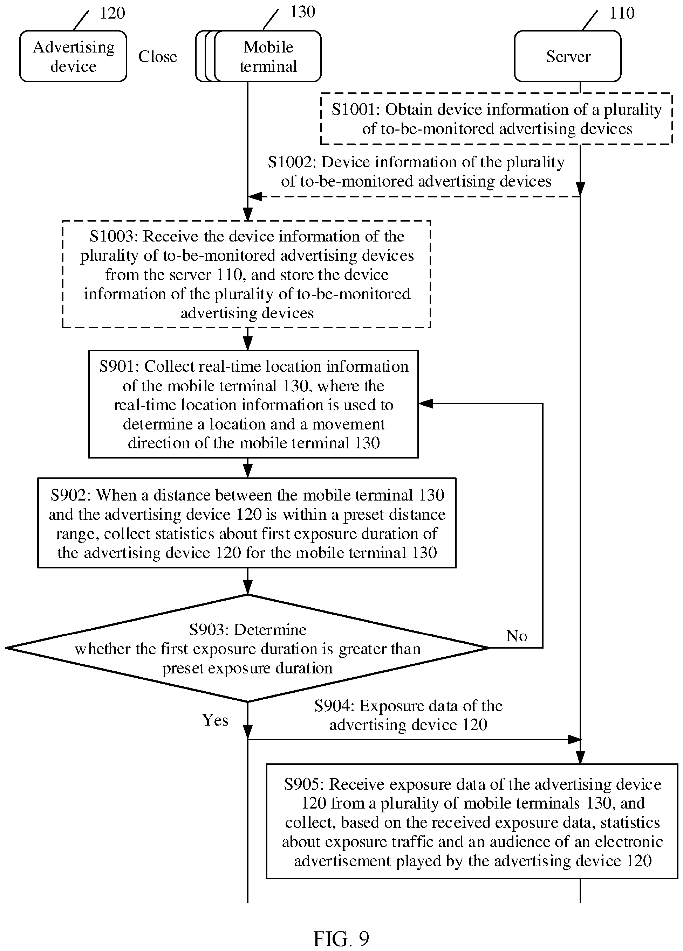

FIG. 9 is a flowchart of another method for collecting statistics about exposure data according to an embodiment of this application;

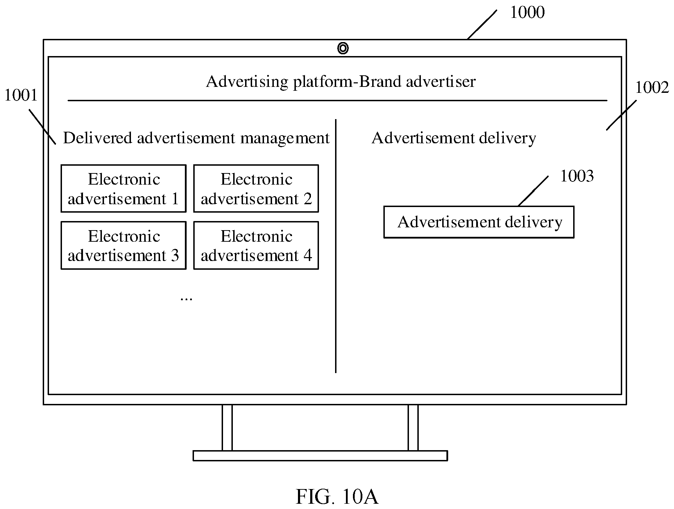

FIG. 10A is a schematic diagram of a terminal display interface of a brand advertiser according to an embodiment of this application;

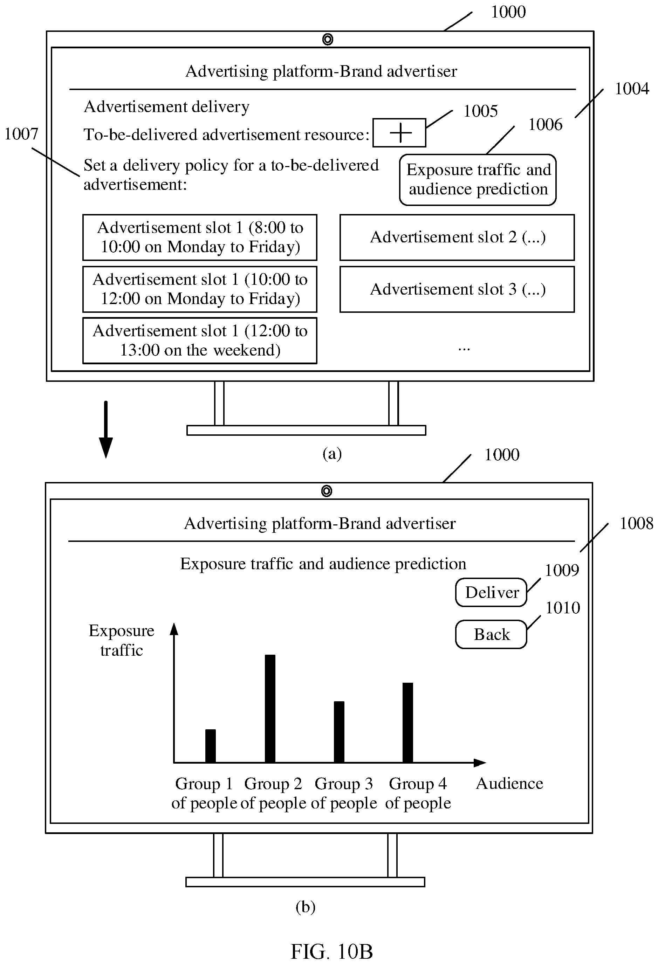

FIG. 10B is a schematic diagram of another terminal display interface of a brand advertiser according to an embodiment of this application;

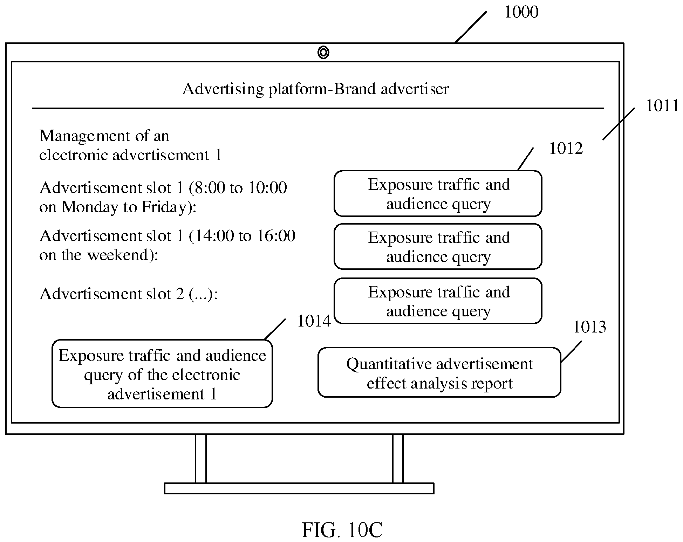

FIG. 10C is a schematic diagram of another terminal display interface of a brand advertiser according to an embodiment of this application;

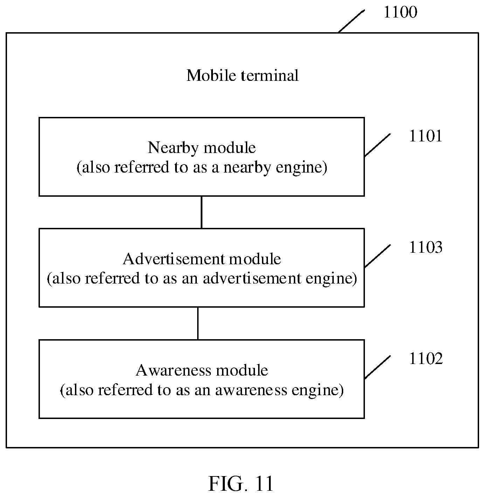

FIG. 11 is a schematic diagram of a structure of a mobile terminal according to an embodiment of this application;

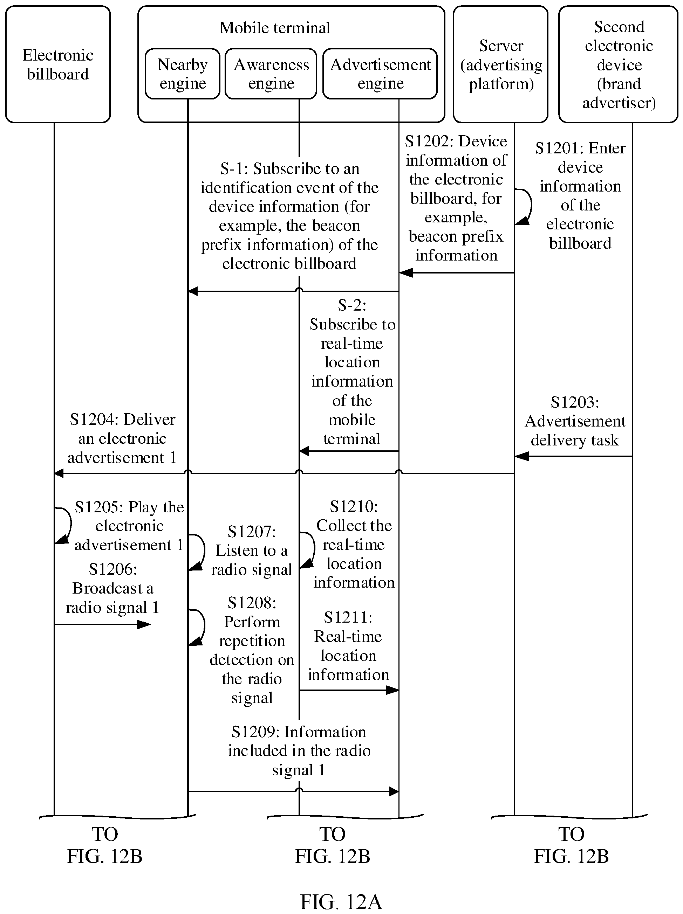

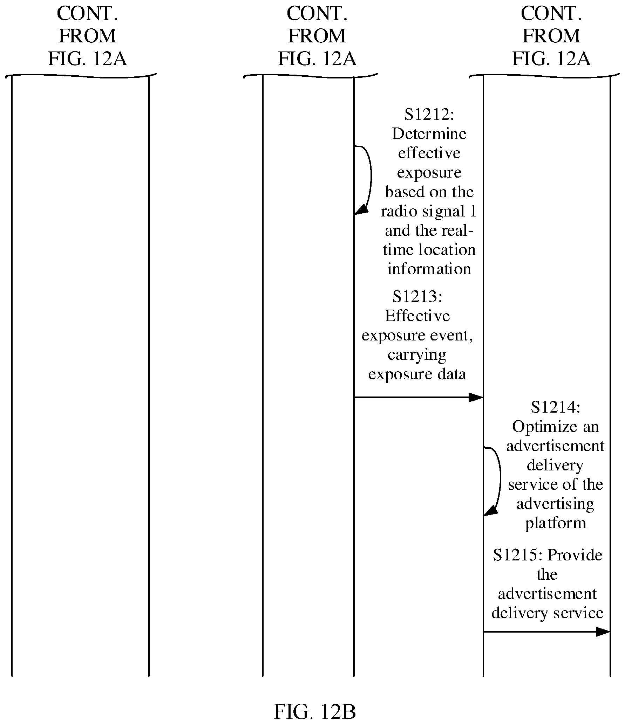

FIG. 12A and FIG. 12B are a flowchart of another method for collecting statistics about exposure data according to an embodiment of this application;

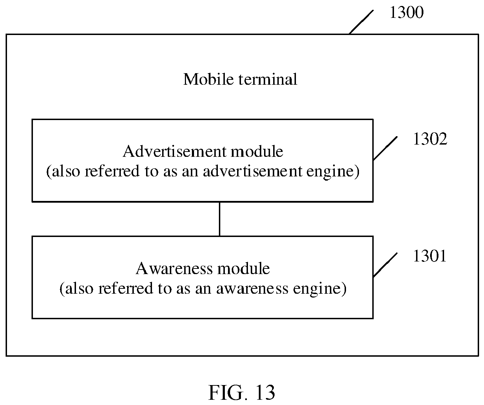

FIG. 13 is a schematic diagram of a structure of another mobile terminal according to an embodiment of this application;

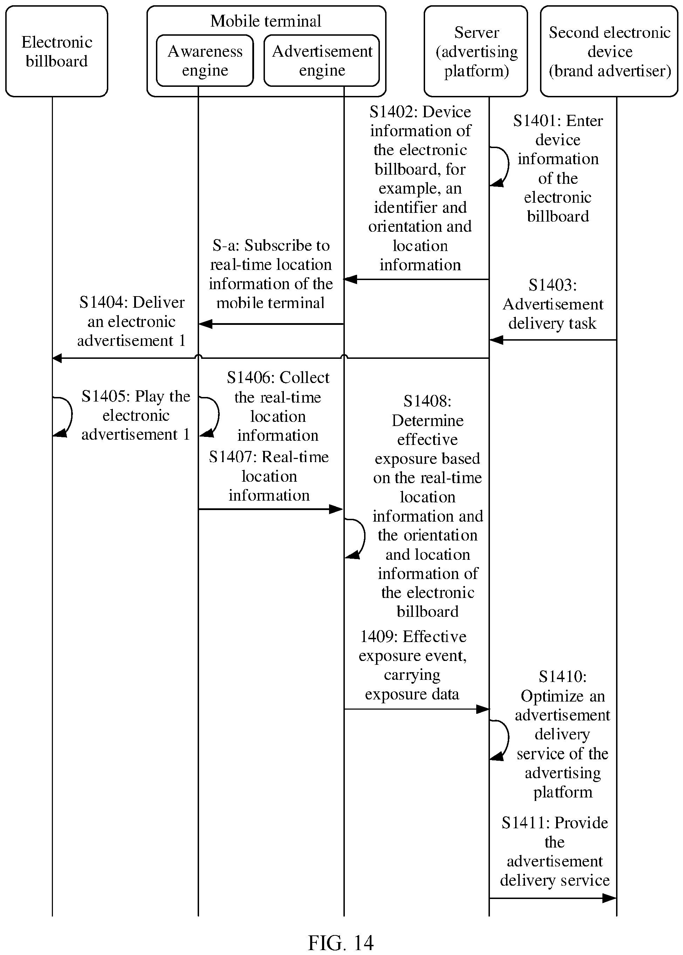

FIG. 14 is a flowchart of another method for collecting statistics about exposure data according to an embodiment of this application;

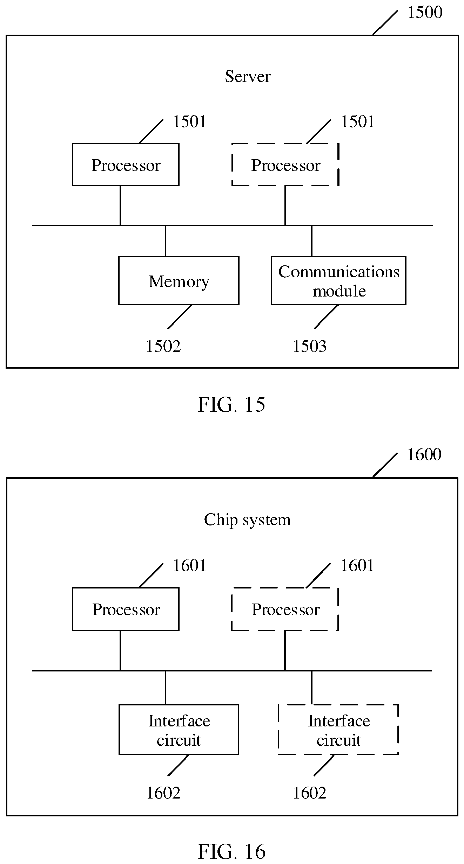

FIG. 15 is a schematic diagram of a structure of a server according to an embodiment of this application; and
FIG. 16 is a schematic diagram of a structure of a chip system according to an embodiment of this application.

### DESCRIPTION OF EMBODIMENTS

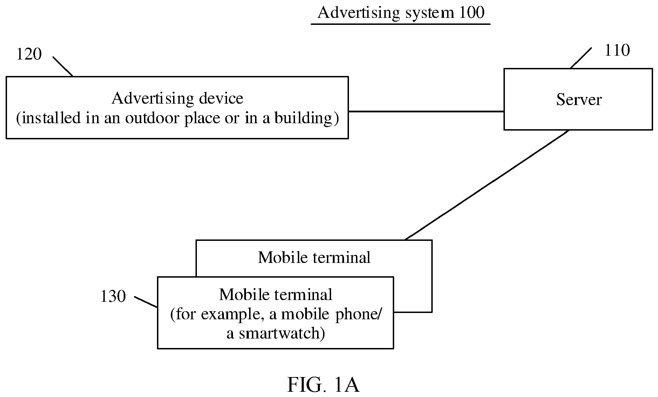

An embodiment of this application provides a method for collecting statistics about exposure data. The method may be applied to an advertising system 100 shown in FIG. 1A. As shown in FIG. 1A, the advertising system 100 may include a server 110, an advertising device 120, and a plurality of mobile terminals 130.

It should be noted that the advertising system 100 may include a plurality of advertising devices 120. FIG. 1A shows an example of an architecture of the advertising system 100 by using only an example in which the advertising system 100 includes one advertising device 120.

The server 110 may provide an advertising platform, to receive an electronic advertisement delivery task triggered by a brand advertiser. The server 110 sends a corresponding advertisement resource to the advertising device 120 based on the advertisement delivery task, and indicates the advertising device 120 to play an electronic advertisement corresponding to the advertisement resource. The advertisement resource may be advertisement content of the advertisement, or may be a link for downloading advertisement content. For example, the server 110 may maintain an advertisement resource pool. The advertisement resource pool stores advertisement resources delivered by all brand advertisers.

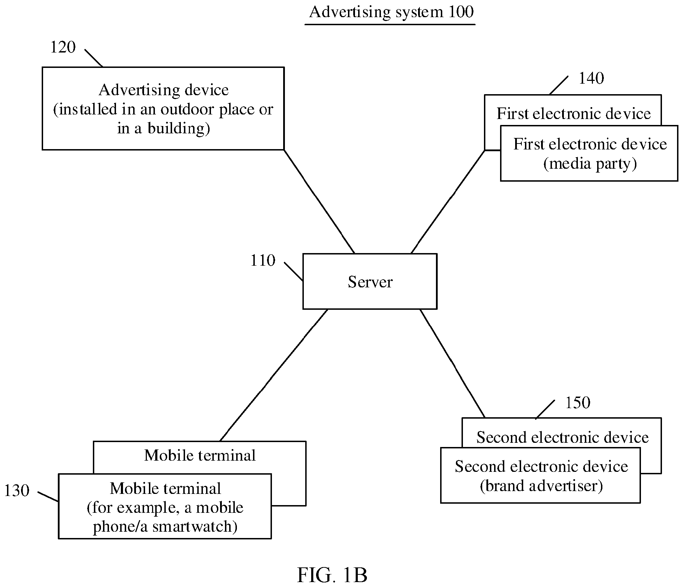

For example, as shown in FIG. 1B, the advertising system may further include a first electronic device 140 and a second electronic device 150. The server 110 provides an advertising platform, and the advertising platform provides an advertisement slot (that is, an advertising device) registration service for a media party, and provides an advertisement delivery service for a brand advertiser.

For example, that the server 110 provides an advertising platform to provide an advertisement delivery service for a brand advertiser may specifically include: A web page corresponding to the advertising platform provided by the server 110 can be logged in by the second electronic device 150 of the brand advertiser to provide the advertisement delivery service for the brand advertiser. Alternatively, the server 110 serves as a server of a second app (application, APP) corresponding to the advertising platform, and provides the advertisement delivery service for the brand advertiser through the second app installed on the second electronic device 150. The brand advertiser may trigger an electronic advertisement delivery task to the server 110 by using the second electronic device 150.

That the server 110 provides an advertising platform to provide an advertisement slot registration service for a media party may specifically include: The server 110 serves as a server of a web page of the advertising platform, so that the first electronic device 140 of the media party can log in to the server to provide the advertisement slot registration service for the media party. Alternatively, the server 110 serves as a server of a first app of the advertising platform, and provides the advertisement slot registration service for the media party through the first app installed on the first electronic device 140. After registering with the advertising platform by using the first electronic device 140, the media party may register an advertisement slot with the server 110, that is, indicate, to the server 110, an advertisement slot that can be used for delivery of an advertisement. For example, the advertisement slot may include the advertising device 120 (for example, an electronic billboard), a location that is in an app and that is used to play the advertisement (for example, a launch page of the app), and a location that is in a web page and that is used to play the advertisement.

For example, the server 110 may be an advertisement server or an application server, or may be another type of server. This is not limited in this embodiment of this application. The server 110 may be one server. Alternatively, the server 110 may be a server cluster including a plurality of servers. Each server in the server cluster may manage a plurality of advertising devices 120. For example, each server in the server cluster may manage a plurality of advertising devices 120 in different areas.

The advertising device (for example, the advertising device 120) in this embodiment of this application may be installed in public space, and is a device configured to play an electronic advertisement. For example, the advertising device 120 may be an electronic billboard installed in public space. The public space may include places such as an outdoor place (for example, a roadside) and a building (for example, an elevator room). For example, the advertising device 120 may be an electronic billboard 410 installed in an outdoor place that is shown in FIG. 4A. For another example, the advertising devices 120 may be electronic billboards 510 and 520 installed in a building that are shown in FIG. 5. The advertising device 120 may include components such as a display and an audio player (for example, a speaker). These devices can work together to play an electronic advertisement. Specifically, the advertising device 120 may play the electronic advertisement according to a specific play policy. For example, the play policy may indicate a play time period and a quantity of play times of the electronic advertisement.

In an implementation, an advertisement resource of the electronic advertisement played by the advertising device 120 may be received from the server 110. For example, the server 110 may receive settings of an advertisement operation staff, determine an electronic advertisement to be played by each advertising device 120 and a play policy of the electronic advertisement, and then send, to the advertising device 120, an advertisement resource and advertisement policy information that are of the electronic advertisement and that are set by the advertisement operation staff for the advertising device 120. The advertisement policy information is used to indicate the play policy of the electronic advertisement. For another example, the advertising device 120 may further request an electronic advertisement from the server 110; and the server 110 may return a corresponding advertisement resource and corresponding advertisement policy information to the advertising device 120 based on the request of the advertising device 120.

In another implementation, an advertisement resource and advertisement policy information of the electronic advertisement played by the advertising device 120 may be manually added by an advertisement operation staff of the server 110 to the advertising device 120. For example, the advertisement operation staff may go to an installation place of the advertising device 120, and add or update an electronic advertisement to/for the advertising device 120 through a data interface on the advertising device 120, for example, a universal serial bus (universal serial bus, USB) port.

In this embodiment of this application, the advertising device 120 may broadcast a radio signal. The radio signal may include data such as an identifier (for example, a first identifier) of the advertising device 120 and orientation and location information of the advertising device 120. The orientation and location information is used to indicate a location (for example, latitude and longitude) and an orientation of the advertising device 120. The mobile terminal 130 may listen to the radio signal, and determine, based on a radio signal obtained through listening and a location (for example, latitude and longitude) and a movement track of the mobile terminal 130, whether the electronic advertisement played by the advertising device 120 generates effective exposure to a user (for example, a user 1) holding the mobile terminal 130. That the electronic advertisement played by the advertising device 120 generates effective exposure to the user 1 means that the user 1 pays attention to (or watches) the electronic advertisement played by the advertising device 120. If the electronic advertisement played by the advertising device 120 generates effective exposure to the user 1, the mobile terminal 130 may report an effective exposure event to the server 110. The effective exposure event may carry the following exposure data: the identifier (for example, the first identifier) of the advertising device 120, effective exposure duration (also referred to as first exposure duration, that is, duration in which the user pays attention to the electronic advertisement played by the advertising device 120), an identifier of the mobile terminal 130, and the like.

The server 110 may receive effective exposure events reported by a plurality of mobile terminals 130. Then, the server 110 may analyze exposure data carried in the effective exposure event, and determine exposure traffic and an audience of the electronic advertisement played by each advertising device 120.

For example, for each advertising device 120, the server 110 may collect statistics about a quantity of effective exposure events of the advertising device 120 in a specific time period (for example, a week, a day, a month, or a time period in a day). Exposure data in an effective exposure event of an advertising device 120 includes an identifier of the advertising device 120. Then, the server 110 may determine the quantity of effective exposure events of the advertising device 120 in the specific time period as exposure traffic of the advertising device 120 in the specific time period.

In addition, the server 110 may collect statistics about the identifier of the mobile terminal in the effective exposure event of the advertising device 120 in the specific time period. It may be understood that different mobile terminals may be associated with or correspond to different users (that is, audiences). The server 110 may store an association relationship between the identifier of the mobile terminal and the user. Therefore, the server 110 may determine, based on the identifier of the mobile terminal in the effective exposure event, an audience that is of the electronic advertisement played by the advertising device 120 and that is in the specific time period, that is, may determine which users watch the electronic advertisement played by the advertising device 120.

It may be understood that one advertising device 120 may play a plurality of electronic advertisements. For example, the advertising device 120 may play different electronic advertisements in different time periods. Optionally, the radio signal may further include an identifier of the electronic advertisement being played by the advertising device 120. Correspondingly, the exposure data may further include the identifier of the electronic advertisement. In this case, the server 110 may further determine, based on the effective exposure events reported by the plurality of mobile terminals 130, the exposure traffic and the audience of each electronic advertisement played by the advertising device 120.

For example, the server 110 may collect statistics about a quantity of effective exposure events of each electronic advertisement in a specific time period (for example, a week, a day, a month, or a time period in a day). The electronic advertisement may be played on a plurality of advertising devices. Therefore, an effective exposure event of one electronic advertisement may be triggered because the plurality of advertising devices generate effective exposure to the mobile terminal when playing the electronic advertisement. Exposure data in the effective exposure event of the electronic advertisement includes an identifier of the electronic advertisement. Then, for each electronic advertisement, the server 110 may determine the quantity of effective exposure events of the electronic advertisement in the specific time period as exposure traffic of the electronic advertisement in the specific time period.

In addition, the server 110 may collect statistics about the identifier of the mobile terminal in the effective exposure event of the electronic advertisement in the specific time period. It may be understood that different mobile terminals correspond to different audiences. The server 110 may store a correspondence between the identifier of the mobile terminal and the user (that is, the audience). Therefore, the server 110 may determine an audience (that is, a group of people) of the electronic advertisement in the specific time period based on the identifier of the mobile terminal in the effective exposure event, that is, may determine which users watch the electronic advertisement.

The server 110 may optimize a delivery policy of the advertising device 120 and a delivery policy of the electronic advertisement based on the exposure traffic and the audience of the electronic advertisement played by each advertising device 120. The delivery policy of the advertising device 120 may indicate a delivery (that is, installation) location of the advertising device 120, a quantity of advertising devices 120 to be delivered (that is, installed) in each region (or area), a size of the advertising device 120, a type of the advertising device 120, and the like. The delivery policy of the electronic advertisement may indicate an advertising device 120 to which the electronic advertisement is to be delivered, a play time period of the electronic advertisement, a quantity of play times of the electronic advertisement, and the like.

In this embodiment of this application, a surveillance camera does not need to be installed on the advertising device 120. Therefore, there is no risk of invading user privacy. In other words, according to the method in this embodiment of this application, the exposure data of the electronic advertisement played by the advertising device 120 can be obtained through statistics collection without invading user privacy.

Further, the exposure data reported by the mobile terminal 130 to the server 110 is obtained based on the radio signal that is broadcast by the advertising device 120 and real-time location information of the mobile terminal 130, and no human being participates in a process in which the mobile terminal 130 obtains the exposure data and reports the exposure data to the server 110. Therefore, accuracy and reliability of the exposure data of the electronic advertisement can be ensured.

In conclusion, according to the method in this embodiment of this application, the mobile terminal of the user may report the exposure data to the server, and the reporting may have legal authorization of the user. Therefore, there is no problem of invading user privacy. In other words, in this embodiment of this application, the exposure data of the electronic advertisement played by the advertising device is obtained through statistics collection without invading user privacy. In addition, accuracy and reliability of the exposure data obtained through statistics collection can be improved, and accuracy and reliability of advertisement effect analysis performed by the server 110 can be further improved.

For example, the mobile terminal 130 may be a device such as a mobile phone, a tablet computer, a wearable device (for example, a smartwatch), a laptop computer, a handheld computer, a notebook computer, an ultra-mobile personal computer (ultra-mobile personal computer, UMPC), a netbook, a cellular phone, a personal digital assistant (personal digital assistant, PDA), a vehicle-mounted device, or an augmented reality (augmented reality, AR)/virtual reality (virtual reality, VR) device. A specific form of the mobile terminal is not specially limited in this embodiment of this application.

For example, the first electronic device 140 or the second electronic device 150 may be a device including a display, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. A specific form of the first electronic device 140 or the second electronic device 150 is not specially limited in this embodiment of this application.

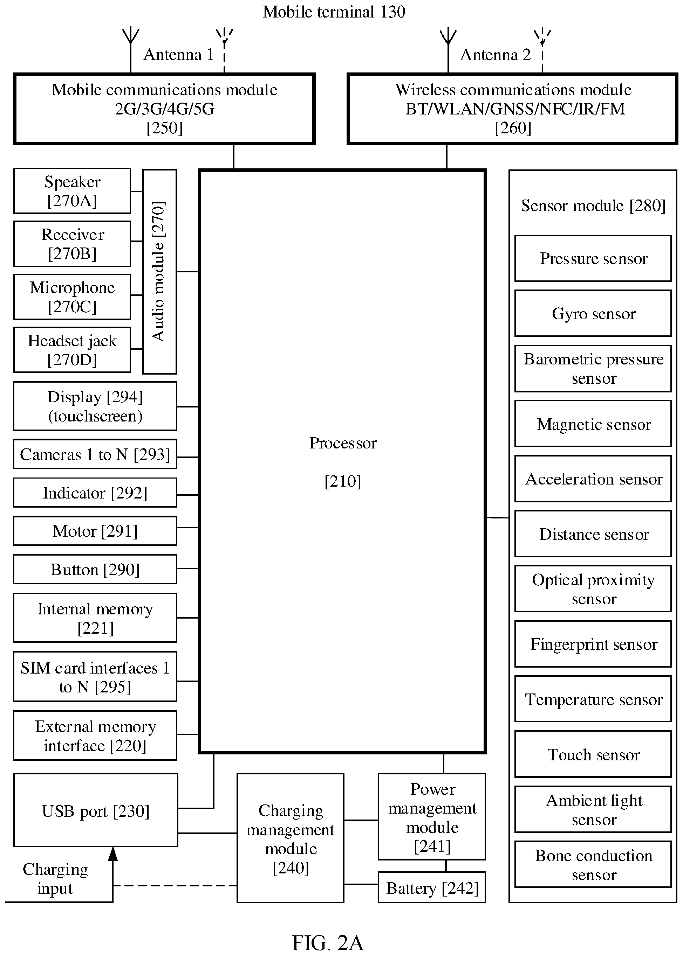

The following describes a hardware structure of the mobile terminal by using an example in which the mobile terminal 130 is a mobile phone. As shown in FIG. 2A, the mobile terminal 130 may include a processor 210, an external memory interface 220, an internal memory 221, a universal serial bus (universal serial bus, USB) port 230, a charging management module 240, a power management module 241, a battery 242, an antenna 1, an antenna 2, a mobile communications module 250, a wireless communications module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like.

The sensor module 280 may include sensors such as a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that the structure shown in this embodiment does not constitute a specific limitation on the mobile terminal 130. In some other embodiments, the mobile terminal 130 may include more or fewer components than those shown in the figure, or may combine some components, or may split some components, or may have different component arrangements. The components shown in the figure may be implemented through hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the mobile terminal 130. The controller may generate an operation control signal based on instruction operation code and a time sequence signal, to complete control of instruction reading and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210, to improve system efficiency.

In some embodiments, the processor 210 may include one or more interfaces. It may be understood that an interface connection relationship between the modules shown in this embodiment is merely an example for description, and does not constitute a limitation on the structure of the mobile terminal 130. In some other embodiments, the mobile terminal 130 may alternatively use an interface connection manner different from that in the foregoing embodiment, or a combination of a plurality of interface connection manners.

The charging management module 240 is configured to receive a charging input from a charger (a charging input of a wired charger and/or a wireless charging input) to charge the battery 242. The charger may be a wireless charger or a wired charger. When charging the battery 242, the charging management module 240 may further supply power to the electronic device by using the power management module 241.

The power management module 241 is configured to connect to the battery 242, the charging management module 240, and the processor 210. The power management module 241 receives an input from the battery 242 and/or the charging management module 240, and supplies power to the processor 210, the internal memory 221, the external memory, the display 294, the camera 293, the wireless communications module 260, and the like. In some embodiments, the power management module 241 may alternatively be disposed in the processor 210. In some other embodiments, the power management module 241 and the charging management module 240 may alternatively be disposed in a same device.

A wireless communication function of the mobile terminal 130 may be implemented by using the antenna 1, the antenna 2, the mobile communications module 250, the wireless communications module 260, the modem processor, the baseband processor, and the like. The antenna 1 and the antenna 2 are configured to: transmit and receive an electromagnetic wave signal. In some embodiments, the antenna 1 and the mobile communications module 250 in the mobile terminal 130 are coupled, and the antenna 2 and the wireless communications module 260 in the mobile terminal 130 are coupled, so that the mobile terminal 130 can communicate with a network and another device by using a wireless communications technology. The wireless communications technology may include a global navigation satellite system (Global Navigation Satellite System, GNSS), a wireless local area network (wireless local area network, WLAN) (for example, a Wi-Fi network) technology, and the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS). For example, the mobile terminal 130 may obtain real-time location information of the mobile terminal 130 by using a positioning technology such as the GPS, the BDS, or the SBAS.

The mobile communications module 250 may provide a wireless communication solution that is applied to the mobile terminal 130 and that includes 2G/3G/4G/5G or the like. For example, the mobile terminal 130 may report the foregoing exposure data to the advertising platform by using the mobile communications module 250.

The wireless communications module 260 may provide a wireless communication solution that is applied to the mobile terminal 130 and that includes a WLAN (for example, a Wi-Fi network), Bluetooth (Bluetooth, BT), a GNSS, or the like. For example, the mobile terminal 130 may obtain the real-time location information of the mobile terminal 130 by using a GNSS positioning technology. For example, the mobile terminal 130 may receive, by using the wireless communications module 260 (for example, a Wi-Fi module or a Bluetooth module), a radio signal that is broadcast by an electronic billboard.

The mobile terminal 130 implements a display function by using the GPU, the display 294, the application processor, and the like. The mobile terminal 130 may implement a photographing function by using the ISP, the camera 293, the video codec, the GPU, the display 294, the application processor, and the like. The external memory interface 220 may be configured to connect to an external storage card such as a micro SD card, to extend a storage capability of the mobile terminal 130. The internal memory 221 may be configured to store computer-executable program code, where the executable program code includes instructions. The processor 210 performs various function applications of the mobile terminal 130 and data processing by running the instructions stored in the internal memory 221. The mobile terminal 130 may implement an audio function by using the audio module 270, the speaker 270A, the receiver 270B, the microphone 270C, the headset jack 270D, the application processor, and the like

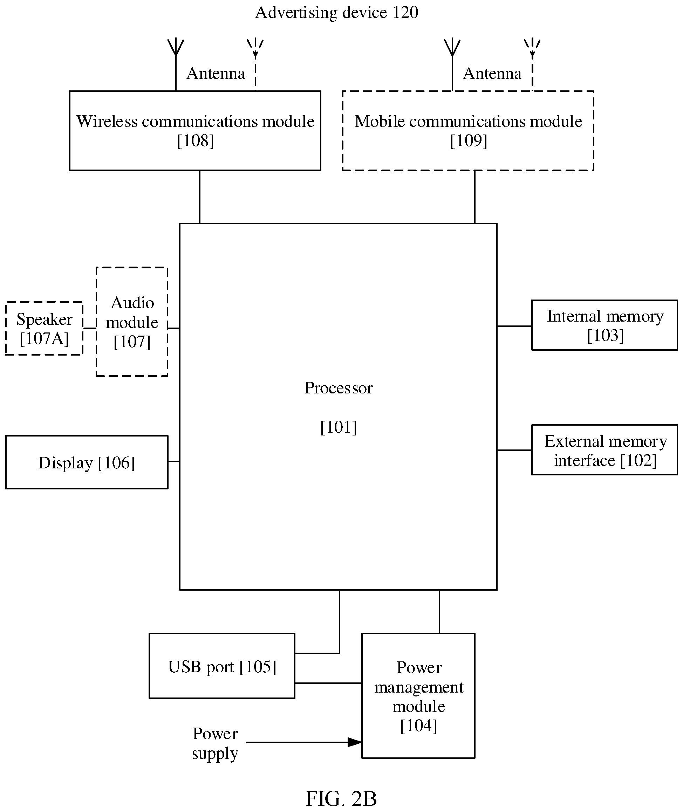

FIG. 2B is a schematic diagram of a structure of an advertising device 120 according to an embodiment of this application. As shown in FIG. 2B, the advertising device 120 may include a processor 101, an external memory interface 102, an internal memory 103, a USB port 105, a power management module 104, an antenna, a wireless communications module 108, a display 106, and the like.

The processor 101 may include one or more processing units. For example, the processor 101 may include an AP, a modem processor, a GPU, an ISP, a controller, a video codec, a DSP, a baseband processor, and/or an NPU. Different processing units may be independent components, or may be integrated into one or more processors. A memory may alternatively be disposed in the processor 101, and is configured to store instructions and data.

The power management module 104 is configured to connect to a power supply. The power management module 104 may be further connected to the processor 101, the internal memory 103, the display 106, the wireless communications module 108, and the like. The power management module 104 receives an input of the power supply through the USB port 105, and supplies power to the processor 101, the internal memory 103, the display 106, the wireless communications module 108, and the like. In some embodiments, the power management module 104 may alternatively be disposed in the processor 101.

A wireless communication function of the electronic billboard may be implemented by using the antenna, the wireless communications module 108, and the like. The wireless communications module 108 may provide a wireless communication solution that is applied to the electronic billboard and that includes a WLAN (for example, a Wi-Fi network), Bluetooth (BT), a GNSS, or the like.

The wireless communications module 108 may be one or more devices that integrate at least one communications processor module. The wireless communications module 108 receives an electromagnetic wave through the antenna, performs frequency modulation and filtering processing on an electromagnetic wave signal, and sends a processed signal to the processor 101. The wireless communications module 108 may further receive a to-be-sent signal from the processor 101, perform frequency modulation and amplification on the signal, and convert a processed signal into an electromagnetic wave for radiation through the antenna. In some embodiments, the antenna and the wireless communications module 108 in the electronic billboard are coupled, so that the electronic billboard can communicate with a network and another device by using a wireless communications technology. For example, the wireless communications module 108 in this embodiment of this application may be a Bluetooth module or a Wi-Fi module. The wireless communications module 108 is configured to broadcast a radio signal in this embodiment of this application.

Optionally, as shown in FIG. 2B, the advertising device 120 may further include a mobile communications module 109. The mobile communications module 109 may be configured to receive related data of an electronic advertisement from the server 110, for example, an advertisement resource of the electronic advertisement and indication information of a playing policy.

The electronic billboard implements a display function by using the GPU, the display 106, the application processor, and the like. The GPU is a microprocessor for image processing, and is connected to the display 106 and the application processor. The GPU is configured to: perform mathematical and geometric calculation, and render an image. The processor 101 may include one or more GPUs that execute program instructions to generate or change display information.

The display 106 is configured to display an image, a video, and the like. The display 106 includes a display panel. The display panel may be an LCD, an OLED, an AMOLED, an FLED, a mini-LED, a micro-LED, a micro-OLED, a QLED, or the like. For example, in this embodiment of this application, the display 106 is configured to display an advertisement.

The video codec is configured to: compress or decompress a digital video. The electronic billboard may support one or more video codecs. In this way, the electronic billboard may play or record videos in a plurality of coding formats, for example, MPEG-1, MPEG-2, MPEG-3, and MPEG-4.

The internal memory 103 may be configured to store computer-executable program code, where the executable program code includes instructions. The processor 101 performs various function applications of the electronic billboard and data processing by running the instructions stored in the internal memory 103. The internal memory 103 may include a program storage area and a data storage area. The program storage area may store an operating system, an application required by at least one function (for example, a sound playing function or an image playing function), and the like. The data storage area may store data (for example, an advertisement playback record or a received advertisement resource) created during use of the electronic billboard. In addition, the internal memory 103 may include a high-speed random access memory, or may include a nonvolatile memory, for example, at least one magnetic disk storage device, a flash storage device, or a UFS.

The external memory interface 102 may be configured to connect to an external storage card, for example, a micro SD card, to extend a storage capability of the advertising device 120. The external storage card communicates with the processor 101 through the external memory interface 102, to implement a data storage function. For example, files such as music and videos are stored in the external storage card.

Optionally, as shown in FIG. 2B, the advertising device 120 may further include an audio module 107 and a speaker 107A. For example, an electronic billboard (that is, the advertising device 120) in an elevator room may include an audio module 107 and a speaker 107A. The advertising device 120 may implement an audio function by using the audio module 107, the speaker 170A, the application processor, and the like.

All methods in the following embodiments may be implemented in the mobile terminal 130 having the foregoing hardware structure and the advertising device 120 having the foregoing hardware structure.

An embodiment of this application provides a method for collecting statistics about exposure data. The mobile terminal 130 may collect real-time location information of the mobile terminal, where the real-time location information is used to determine a location and a movement direction of the mobile terminal 130. The mobile terminal 130 may further obtain a first identifier and orientation and location information of the advertising device 120, where the orientation and location information is used to indicate a location and an orientation of the advertising device 120. For a method in which the mobile terminal 130 obtains the first identifier and the orientation and location information of the advertising device 120, refer to detailed descriptions in Embodiment 1 or Embodiment 2. Details are not described herein in this embodiment. Then, the mobile terminal 130 may determine whether an electronic advertisement played by the advertising device 120 generates effective exposure to a user holding the mobile terminal 130. Specifically, the mobile terminal 130 may collect statistics about first exposure duration of the advertising device 120 for the mobile terminal 120. When the first exposure duration is greater than preset exposure duration, it indicates that the electronic advertisement played by the advertising device 120 generates effective exposure to the user holding the mobile terminal 130, and the mobile terminal 130 may send exposure data of the advertising device 120 to the server 110, where the exposure data may include the first identifier of the advertising device 120 and an identifier of the mobile terminal 130. The server 110 may receive the exposure data from a plurality of mobile terminals 130, and collect statistics about exposure traffic and an audience of the advertising device 120 based on the received exposure data, where the exposure traffic is a quantity of users who have watched the electronic advertisement played by the advertising device 120, and the audience is a group of people who have watched the electronic advertisement; and the identifier of the mobile terminal 130 corresponds to a user who uses the mobile terminal 130.

The following describes, in detail by using Embodiment 1 and Embodiment 2, the method for collecting statistics about exposure data provided in embodiments of this application.

### Embodiment 1

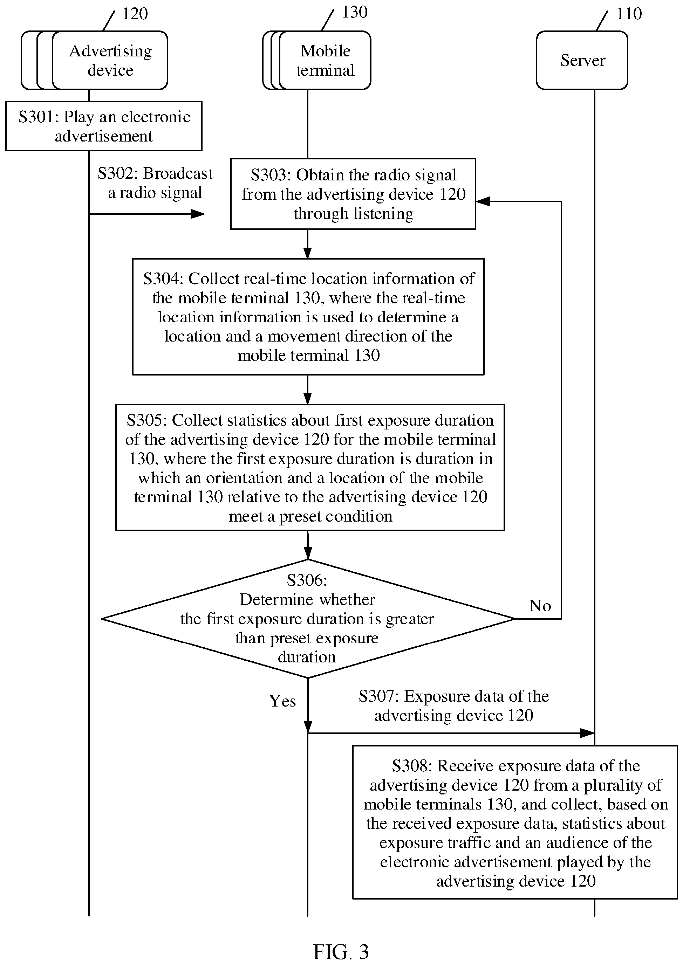

An embodiment of this application provides a method for collecting statistics about exposure data. In this embodiment, the advertising device 120 may broadcast a radio signal. The mobile terminal 130 may listen to the radio signal, and determine, based on a radio signal obtained through listening and a real-time location (for example, latitude and longitude) of the mobile terminal 130, whether an electronic advertisement played by the advertising device 120 generates effective exposure to a user (for example, a user 1) holding the mobile terminal 130. If the electronic advertisement played by the advertising device 120 generates effective exposure to the user 1, the mobile terminal 130 may report an effective exposure event to the server 110. The server 110 may collect, based on effective exposure events reported by a plurality of mobile terminals 130, statistics about exposure traffic and an audience of the electronic advertisement played by the advertising device 120. Specifically, as shown in FIG. 3, the method for collecting statistics about exposure data may include S301 to S308.

S301: The advertising device 120 plays an electronic advertisement.

It may be understood that one advertising device (for example, an electronic billboard) may play one or more electronic advertisements. It is assumed that the advertising device 120 stores advertisement resources of a plurality of electronic advertisements. The advertising device 120 may play the plurality of electronic advertisements according to play policies of the plurality of electronic advertisements. For example, the advertising device 120 may sequentially and cyclically play the plurality of electronic advertisements in a play sequence indicated by the play policies. For another example, the advertising device 120 may play different electronic advertisements in the plurality of electronic advertisements in different time periods based on play time periods of the electronic advertisements that are indicated by the play policies. For still another example, the advertising device 120 may play the plurality of electronic advertisements based on quantities of play times of the electronic advertisements that are indicated by the play policies. For sources of the advertisement resources that are of the plurality of electronic advertisements and that are stored in the advertising device 120, refer to detailed descriptions in the foregoing embodiment. Details are not described herein again in this embodiment of this application.

S302: The advertising device 120 broadcasts the radio signal.

It may be understood that the advertising device 120 may include a wireless communications module. For example, the wireless communications module may be a Bluetooth module, and the radio signal is a Bluetooth signal, for example, a Bluetooth beacon (beacon) frame. For another example, the wireless communications module may be a Wi-Fi module, and the radio signal is a Wi-Fi signal, for example, a Wi-Fi beacon (beacon) frame.

In an implementation (a) of Embodiment 1, the radio signal may include a first identifier (identity, ID) of the advertising device 120 and orientation and location information of the advertising device 120.

The first identifier (identity, ID) of the advertising device 120 is used to uniquely identify the advertising device 120. The first identifier of the advertising device 120 may be configured by the server 110 for the advertising device 120, and the server 110 may configure different first identifiers for different advertising devices.

For example, the server 110 may configure the first identifier for the advertising device 120 based on an area (for example, a block, a road section, or an administrative region) in which the advertising device 120 is located and a number of the advertising device 120 in the area. For example, the first identifier of the advertising device 120 may be Xi'an City South Second Ring Road West Section 15. "Xi'an City South Second Ring Road West Section" may be the area in which the advertising device 120 is located. A plurality of advertising devices may be installed in the area "Xi'an City South Second Ring Road West Section", and "15" is a number of the advertising device 120 in the area in which the plurality of advertising devices are installed.

For another example, the first identifier of the advertising device 120 may be a group of characters or a character string. The server 110 may configure different characters or character strings for different advertising devices to identify the advertising devices.

Alternatively, the first identifier of the advertising device 120 may be configured in the advertising device 120 when the advertising device 120 is delivered from a factory. For example, the first identifier of the advertising device 120 may be a media access control (media access control, MAC) address of the advertising device 120.

It should be noted that, the first identifier of the advertising device 120 includes but is not limited to the foregoing two cases. Any identifier that can be used to identify the advertising device 120 to enable the server 110 and/or the mobile terminal 130 to identify the advertising device 120 can be used as the first identifier of the advertising device 120. Specific content of the first identifier of the advertising device 120 is not limited in this embodiment of this application.

The orientation and location information of the advertising device 120 is used to indicate a location and an orientation of the advertising device 120. Specifically, the orientation and location information may include location information (for example, latitude and longitude information) and orientation information of the advertising device 120.

The location information of the advertising device 120 is used to indicate a location of the advertising device 120. For example, the location information may be latitude and longitude of the advertising device 120. The orientation and location information of the advertising device 120 is used to indicate an orientation of the advertising device 120, for example, an orientation of a display of the advertising device 120.

For example, FIG. 4A is a schematic diagram of a scenario to which a method is applied according to an embodiment of this application. The advertising device 120 may be an electronic billboard 410 shown in FIG. 4A. The electronic billboard 410 is installed in an outdoor place. A vector Z1 shown in FIG. 4A is used to indicate an orientation of the electronic billboard 410, and the vector Z1 is perpendicular to a display of the electronic billboard 410. A point O1 shown in FIG. 4A is used to indicate a location of the electronic billboard 410.

For another example, FIG. 5 is a schematic diagram of another scenario to which a method is applied according to an embodiment of this application. The advertising devices 120 may be electronic billboards 510 and 520 shown in FIG. 5. The electronic billboards 510 and 520 are installed in a building (for example, an indoor place). A vector Z2 shown in FIG. 5 is used to indicate an orientation of the electronic billboard 510, and the vector Z2 is perpendicular to a display of the electronic billboard 510. A vector Z3 shown in FIG. 5 is used to indicate an orientation of the electronic billboard 520, and the vector Z3 is perpendicular to a display of the electronic billboard 520. A point O2 shown in FIG. 5 is used to indicate a location of the electronic billboard 510, and a point O3 shown in FIG. 5 is used to indicate a location of the electronic billboard 520.

For example, orientation and location information (including location information and orientation information) of the advertising device 120 may be measured by using instruments (such as a GPS locator and a gyro sensor) when an advertisement operation staff installs an electronic billboard. The server 110 may receive the orientation and location information of the advertising device 120 that is entered by the advertisement operation staff, and then send the orientation and location information of the advertising device 120 to the advertising device 120. Alternatively, the advertisement operation staff may enter the orientation and location information to the advertising device 120 through a data interface (for example, a USB port) on the advertising device 120. The advertising device 120 may store the orientation and location information entered by the advertisement operation staff.

In some embodiments, the advertising device 120 may include one or more displays. For example, the electronic billboard 510 shown in FIG. 5 is installed on a wall in an indoor place, and the electronic billboard 510 includes only one display. For another example, the electronic billboard 410 shown in FIG. 4A is installed in an outdoor place and fastened on the ground. The electronic billboard 410 may include two displays, or may include two displays (for example, front and rear sides of the electronic billboard 410 each include a display). When the front and rear sides of the electronic billboard 410 each include the display, the electronic billboard 410 may broadcast two radio signals, and the radio signals include different orientation and location information, for example, orientations indicated by the orientation and location information are opposite. In this embodiment of this application, for example, the electronic billboard 410 shown in FIG. 4A includes only one display.

S303: The mobile terminal 130 obtains the radio signal from the advertising device 120 through listening.

After a wireless communication function (for example, a Bluetooth function or a Wi-Fi function) of the mobile terminal 130 is enabled, the mobile terminal 130 may listen to a radio signal that is broadcast by another device. For example, a Bluetooth module of the mobile terminal 130 may listen to a Bluetooth signal that is broadcast by another device, for example, a Bluetooth beacon frame. For another example, a Wi-Fi module of the mobile terminal 130 may listen to a Wi-Fi signal that is broadcast by another device, for example, a Wi-Fi beacon frame.

S304: The mobile terminal 130 collects real-time location information of the mobile terminal 130, where the real-time location information is used to determine a location and a movement direction of the mobile terminal 130.

It may be understood that the location of the mobile terminal 130 may change as a user of the mobile terminal 130 moves. In this embodiment of this application, the mobile terminal 130 may periodically collect the real-time location information of the mobile terminal 130, or the mobile terminal 130 may collect the real-time location information of the mobile terminal 130 in real time. In this way, the mobile terminal 130 may not only determine the location of the mobile terminal 130 based on the collected real-time location information, but also determine the movement direction of the mobile terminal 130 based on a change of the real-time location information.

For example, the advertising device 120 is the electronic billboard 410 shown in FIG. 4A, and the mobile terminal 130 is a mobile phone A or a smartwatch B shown in FIG. 4A. As shown in FIG. 4A, the mobile phone A may collect real-time location information of the mobile phone A. For example, the real-time location information collected by the mobile phone A indicates that a location change (that is, a movement track) of the mobile phone A is: a location 1 -> a location 2 -> a location 3 -> a location 4. As a location of the mobile phone A changes, a movement direction of the mobile phone A may also change. For example, the movement direction of the mobile phone A may be a direction from the location 1 to the location 2, a direction from the location 2 to the location 3, and a direction from the location 3 to the location 4. As shown in FIG. 4A, the smartwatch B may collect real-time location information of the smartwatch B. For example, the real-time location information collected by the smartwatch B indicates that a location change (that is, a movement track) of the smartwatch B is: a location a -> a location b -> a location c -> a location d. As a location of the smartwatch B changes, a movement direction of the smartwatch B may also change. For example, the movement direction of the smartwatch B may be a direction from the location a to the location b, a direction from the location b to the location c, and a direction from the location c to the location d.

For example, the advertising device 120 is the electronic billboard 510 shown in FIG. 5, and the mobile terminal 130 is a mobile phone a shown in FIG. 5. As shown in FIG. 5, the mobile phone a may collect real-time location information of the mobile phone a. For example, the real-time location information collected by the mobile phone a indicates that a location change (that is, a movement track) of the mobile phone a is: a location A -> a location B -> a location C. As a location of the mobile phone a changes, a movement direction of the mobile phone a may also change. For example, the movement direction of the mobile phone a may be a direction from the location A to the location B, and a direction from the location B to the location C.

In some embodiments, regardless of whether the mobile terminal 130 obtains a radio signal through listening, the mobile terminal 130 can collect the real-time location information of the mobile terminal 130 provided that a positioning function (for example, a GPS positioning function) of the mobile terminal 130 is enabled.

In some other embodiments, to reduce power consumption of the mobile terminal 130, after obtaining a radio signal (for example, the foregoing radio signal) through listening, the mobile terminal 130 may perform S304 of collecting the real-time location information of the mobile terminal 130. Specifically, S304 may be replaced with the following: In response to obtaining a radio signal through listening, the mobile terminal 130 collects the real-time location information of the mobile terminal 130, where the radio signal is the radio signal that is broadcast by the advertising device 120.

S305: The mobile terminal 130 collects statistics about first exposure duration of the advertising device 120 for the mobile terminal 130, where the first exposure duration is duration in which an orientation and a location of the mobile terminal 130 relative to the advertising device 120 meet a preset condition.

That the orientation and the location of the mobile terminal 130 relative to the advertising device 120 meet the preset condition may be specifically as follows: A distance between the mobile terminal 130 and the advertising device 120 is within a preset distance range, the mobile terminal 130 is located on one side of the orientation of the advertising device 120, and an included angle between the movement direction of the mobile terminal 130 and the orientation of the advertising device 120 is within a preset included angle range. The location and the orientation of the advertising device 120 are indicated by the orientation and location information in the radio signal.

It may be understood that, if the orientation and the location of the mobile terminal 130 relative to the advertising device 120 meet the preset condition, it indicates that a user holding the mobile terminal 130 may pay attention to the advertising device 120, that is, the advertising device 120 may generate effective exposure to the user holding the mobile terminal. If the orientation and the location of the mobile terminal 130 relative to the advertising device 120 do not meet the preset condition, it indicates that a user holding the mobile terminal 130 does not pay attention to the advertising device 120, that is, the advertising device 120 does not generate effective exposure to the user holding the mobile terminal 130.

The preset exposure duration is a duration determining threshold used to determine whether an electronic advertisement played by the advertising device 120 generates effective exposure to the user (for example, a user 1) holding the mobile terminal 130. The mobile terminal 130 may determine whether effective exposure duration (also referred to as first exposure duration, that is, duration in which the user pays attention to the electronic advertisement played by the advertising device 120) is greater than the preset exposure duration, to determine whether the electronic advertisement played by the advertising device 120 generates effective exposure to the user 1. For example, the preset exposure duration may be 5 to 10 seconds (s).

The advertising device 120 may play a plurality of electronic advertisements. The foregoing preset exposure duration is applicable to all the electronic advertisements played by the advertising device 120. That is, when the advertising device 120 plays all the electronic advertisements, preset exposure duration included in radio signals that are broadcast by the advertising device 120 is the same.

Alternatively, when the advertising device 120 plays different electronic advertisements, preset exposure duration included in radio signals that are broadcast by the advertising device 120 may be different. For example, when the advertising device 120 plays an electronic advertisement 1, preset exposure duration included in a radio signal that is broadcast by the advertising device 120 is 10s. When the advertising device 120 plays an electronic advertisement 2, preset exposure duration included in a radio signal that is broadcast by the advertising device 120 is 8s.

For example, preset exposure duration corresponding to an electronic advertisement may be determined based on duration required by the advertising device 120 to completely play the electronic advertisement (which is briefly referred to as play duration). For example, the preset exposure duration may be a product of the play duration and a preset percentage (for example, 80%, 75%, or 60%).

The preset distance range is a determining threshold of the distance between the advertising device 120 and the mobile terminal 130. The mobile terminal 130 determines whether the distance between the advertising device 120 and the mobile terminal 130 is within the preset distance range, to determine whether the electronic advertisement played by the advertising device 120 generates effective exposure to the user 1. For example, as shown in FIG. 4A, a point O1 is a location of the electronic billboard 410. FIG. 4A shows two circles (circles shown by dashed lines) with a circle center O1, a radius R1, and a radius R2. The preset distance range is R2 to R1 shown in FIG. 4A.

The preset distance range may be obtained by measuring the distance between the advertising device 120 and the mobile terminal 130 and investigating effects of watching, at different distances by the user (for example, the user 1) holding the mobile terminal 130, the electronic advertisement played by the advertising device 120. The preset distance range may be obtained by collecting statistics about results of a plurality of times of measurement and investigation. When the user 1 is located on one side of an orientation of the advertising device 120, and the user faces the advertising device 120, if a distance between the user 1 and the advertising device 120 is within the preset distance range (R2 to R1 shown in FIG. 4A), the user 1 can clearly and completely watch the electronic advertisement played by the advertising device 120.

It should be noted that, when the preset distance range is determined, the investigated user is a user whose vision or corrected vision is normal vision (for example, 1.0). For example, the preset distance range may be 20 meters (m) to 100 m. As shown in FIG. 4A, R1 = 20 m, and R2 = 100 m. In this embodiment of this application, that the user can clearly and completely watch the electronic advertisement played by the advertising device 120 specifically means that the user can watch the electronic advertisement played by the advertising device 120, and learn, through watching, of general content to be propagated by the electronic advertisement.

Certainly, for determining the preset distance range, further refer to a maximum transmission distance of the radio signal. For example, the maximum transmission distance of the radio signal may be greater than a maximum value of the preset distance range. Alternatively, a difference between the maximum transmission distance of the radio signal and the maximum value of the preset distance range is less than a preset value (for example, 10 m, 5 m, or 3 m).

The preset included angle range in this embodiment of this application is obtained by investigating and collecting, when "the distance between the mobile terminal 130 and the advertising device 120 is within the preset distance range, and the mobile terminal 130 is located on one side of the orientation of the advertising device 120", statistics about effects of watching, at different included angles between movement directions of the mobile terminal 130 and orientations of the advertising device 120 by the user (for example, the user 1) holding the mobile terminal 130, the electronic advertisement played by the advertising device 120.

It should be noted that, when "the distance between the mobile terminal 130 and the advertising device 120 is within the preset distance range, and the mobile terminal 130 is located on one side of the orientation of the advertising device 120", if the included angle between the movement direction of the mobile terminal 130 and the orientation of the advertising device 120 is within the preset included angle range, the user holding the mobile terminal 130 can clearly and completely watch the electronic advertisement played by the advertising device 120.

For example, the advertising device 120 is the electronic billboard 410 shown in FIG. 4A. (a), (c), (e), (g), and (i) in FIG. 4B each are a top view of the electronic billboard 410, and (b), (d), (f), (h), and (j) in FIG. 4B each are a schematic diagram of an included angle between an orientation of the electronic billboard 410 and a movement direction of the mobile terminal 130. A vector Z1 is used to indicate an orientation of the electronic billboard 410.

When the movement direction of the mobile terminal 130 is a direction shown by a vector a shown in (a) in FIG. 4B, the included angle between the movement direction of the mobile terminal 130 and the orientation of the electronic billboard 410 is α1 shown in (b) in FIG. 4B, that is, an included angle between the vector a and the vector Z1. Herein, α1 < 90°. Usually, when the movement direction of the mobile terminal 130 is the direction shown by the vector a shown in (a) in FIG. 4B, an orientation of the face of the user (that is, the user 1) holding the mobile terminal 130 is also the direction shown by the vector a. In this case, it is difficult for the user 1 to clearly and completely watch the electronic advertisement played by the electronic billboard 410. Therefore, when the included angle between the movement direction of the mobile terminal 130 and the orientation of the electronic billboard 410 is less than 90°, the electronic advertisement played by the electronic billboard 410 does not generate effective exposure to the user 1.

When the movement direction of the mobile terminal 130 is the direction shown by a vector b shown in (c) in FIG. 4B, the included angle between the movement direction of the mobile terminal 130 and the orientation of the electronic billboard 410 is α2 shown in (d) in FIG. 4B, that is, an included angle between the vector b and the vector Z1. Herein, α2 = 90°. Usually, when the movement direction of the mobile terminal 130 is the direction shown by the vector b shown in (c) in FIG. 4B, an orientation of the face of the user 1 is also the direction shown by the vector b. In this case, it is difficult for the user 1 to clearly and completely watch the electronic advertisement played by the electronic billboard 410. Therefore, when the included angle between the movement direction of the mobile terminal 130 and the orientation of the electronic billboard 410 is equal to 90°, the electronic advertisement played by the electronic billboard 410 does not generate effective exposure to the user 1.

When the movement direction of the mobile terminal 130 is a direction shown by a vector c shown in (e) in FIG. 4B, the included angle between the movement direction of the mobile terminal 130 and the orientation of the electronic billboard 410 is α3 shown in (f) in FIG. 4B, that is, an included angle between the vector c and the vector Z1. Herein, 90° < α3 < 180°. Usually, when the movement direction of the mobile terminal 130 is the direction shown by the vector c shown in (e) in FIG. 4B, an orientation of the face of the user 1 is also the direction shown by the vector c. In this case, the user 1 can clearly and completely watch the electronic advertisement played by the electronic billboard 410. Therefore, when the included angle between the movement direction of the mobile terminal 130 and the orientation of the electronic billboard 410 is greater than 90° and less than 180°, the electronic advertisement played by the electronic billboard 410 can generate effective exposure to the user 1.

When the movement direction of the mobile terminal 130 is a direction shown by a vector d shown in (g) in FIG. 4B, the included angle between the movement direction of the mobile terminal 130 and the orientation of the electronic billboard 410 is α4 shown in (h) in FIG. 4B, that is, an included angle between the vector d and the vector Z1. Herein, α4 = 180°. Usually, when the movement direction of the mobile terminal 130 is the direction shown by the vector d shown in (g) in FIG. 4B, an orientation of the face of the user 1 is also the direction shown by the vector d. In this case, the user 1 can clearly and completely watch the electronic advertisement played by the electronic billboard 410. Therefore, when the included angle between the movement direction of the mobile terminal 130 and the orientation of the electronic billboard 410 is equal to 180°, the electronic advertisement played by the electronic billboard 410 can generate effective exposure to the user 1.

When the movement direction of the mobile terminal 130 is a direction shown by a vector e shown in (i) in FIG. 4B, the included angle between the movement direction of the mobile terminal 130 and the orientation of the electronic billboard 410 is α5 shown in (j) in FIG. 4B, that is, an included angle between the vector e and the vector Z1. Herein, 90° < α5 < 180°. Usually, when the movement direction of the mobile terminal 130 is the direction shown by the vector e shown in (i) in FIG. 4B, an orientation of the face of the user 1 is also the direction shown by the vector e. In this case, the user 1 can clearly and completely watch the electronic advertisement played by the electronic billboard 410. Therefore, when the included angle between the movement direction of the mobile terminal 130 and the orientation of the electronic billboard 410 is greater than 90° and less than 180°, the electronic advertisement played by the electronic billboard 410 can generate effective exposure to the user 1.

In conclusion, when the included angle between the movement direction of the mobile terminal 130 and the orientation of the electronic billboard 410 is greater than 90° and less than or equal to 180°, the electronic advertisement played by the electronic billboard 410 can generate effective exposure to the user 1. For example, the preset included angle range may be [M1, M2], where 90° < M1 < 180°, and M1 < M2 ≤ 180°. For example, M1 = 100°, and M2 = 180°, and the preset included angle range is [100°, 180°]. For another example, M1 = 110°, M2 = 180°, and the preset included angle range is [110°, 180°].

It should be noted that, in the implementation (a), the preset distance range, the preset included angle range, and preset exposure duration in S306 may be pre-stored in the mobile terminal 130. For example, the preset distance range, the preset included angle range, and the preset exposure duration may be sent by the server 110 to the mobile terminal 130. After receiving the preset distance range, the preset included angle range, and the preset exposure duration from the server 110, the mobile terminal 130 may store the preset distance range, the preset included angle range, and the preset exposure duration. For another example, the preset distance range, the preset included angle range, and the preset exposure duration may be set by the user on the mobile terminal 130.

S306: The mobile terminal 130 determines whether the first exposure duration is greater than the preset exposure duration.

The orientation and the location of the mobile terminal 130 relative to the advertising device 120 may meet the preset condition because the user holding the mobile terminal 130 pays attention to the electronic advertisement played by the advertising device 120, or the orientation and the location of the mobile terminal 130 relative to the advertising device 120 may just meet the preset condition because the user holding the mobile terminal 130 is around the advertising device 120.

If the orientation and the location of the mobile terminal 130 relative to the advertising device 120 meet the preset condition because the user holding the mobile terminal 130 pays attention to the electronic advertisement played by the advertising device 120, the first exposure duration may be long. Specifically, if the first exposure duration is greater than the preset exposure duration, it indicates that the advertising device 120 generates effective exposure to the user holding the mobile terminal 130. In this case, the mobile terminal 130 may report an effective exposure event to the server 110. For example, the mobile terminal 130 may perform S307.

If the orientation and the location of the mobile terminal 130 relative to the advertising device 120 just meet the preset condition because the user holding the mobile terminal 130 is around the advertising device 120, the first exposure duration may be short. Specifically, if the first exposure duration is less than the preset exposure duration, it indicates that the advertising device 120 does not generate effective exposure to the user holding the mobile terminal 130. In this case, the mobile terminal 130 may perform S303.

S307: The mobile terminal 130 sends exposure data of the advertising device 120 to the server 110.

If the first exposure duration is greater than the preset exposure duration, it indicates that the electronic advertisement played by the advertising device 120 generates effective exposure to the user holding the mobile terminal 130. In this case, the mobile terminal 130 may report an effective exposure event to the server 110. Specifically, the mobile terminal 130 may send exposure data of the reported effective exposure event, that is, the exposure data of the advertising device 120, to the server 110.

In the implementation (a), the radio signal includes the following data: a first identifier and orientation and location information of the advertising device 120. In this implementation, the exposure data may include the first identifier of the advertising device 120 and an identifier of the mobile terminal 130.

The first identifier of the advertising device 120 is used to identify the advertising device 120. The server 110 may determine, based on the first identifier included in the effective exposure event, a specific advertising device whose effective exposure event is the effective exposure event. For each advertising device 120, the server 110 may collect statistics about a quantity of effective exposure events of the advertising device 120 in a specific time period (for example, a week, a day, a month, or a time period in a day). Then, the server 110 may determine the quantity of effective exposure events of the advertising device 120 in the specific time period as exposure traffic of the advertising device 120 in the specific time period. In conclusion, the first identifier of the advertising device 120 may be used to collect statistics about the exposure traffic of the advertising device 120, that is, exposure traffic of the electronic advertisement played by the advertising device 120.

The identifier of the mobile terminal 130 may be a unified identity. The unified identity may be automatically generated by the mobile terminal 130. The unified identity corresponds to the mobile terminal 130, and may be used to correspond to the user who uses the mobile terminal 130, or is used to identify the user who uses the mobile terminal 130. Unified identities corresponding to different users are different. In this embodiment of this application, the identifier of the mobile terminal 130 is used to determine a specific user holding the mobile terminal 130, that is, determine an audience of the electronic advertisement.

It should be noted that the identifier (for example, the unified identity) of the mobile terminal 130 corresponds to the user who uses the mobile terminal 130, that is, the user who uses the mobile terminal 130 may be determined based on the identifier of the mobile terminal 130. Therefore, after receiving the exposure data including the identifier of the mobile terminal 130, the server 110 may determine, based on the identifier of the mobile terminal 130, specific users (that is, a group of people) who use the mobile terminal 130, to determine the audience of the electronic advertisement.

In this embodiment, the unified identity is a newly defined identifier, is an identifier newly added to the conventional technology, and is an identifier that does not exist in the conventional technology. The unified identity and an identifier in the conventional technology may exist simultaneously and independently.

It may be understood that the unified identity may be an identifier different from the identifier in the conventional technology. For example, the unified identity may be represented by using a brand new character string. For example, the unified identity may include a random number, or include two parts: a prefix and a random number. The random number may be a character string of 256 bits or another length. The prefix may be a character string used to distinguish between different equipment vendors (for example, Huawei or another equipment vendor). Alternatively, although the unified identity is a newly defined identifier, but the unified identity may be an identifier in the conventional technology, that is, the unified identity may be an identifier in the conventional technology. The mobile terminal 130 may use the identifier in the conventional technology as the newly defined unified identity. For example, the mobile terminal 130 is a mobile phone. The unified identity may be an existing device serial number of the mobile phone, for example, an international mobile equipment identity (international mobile equipment identity, IMEI). The unified identity and the device serial number of the mobile phone are two types of identifiers that exist simultaneously and independently. For another example, the mobile terminal 130 is a mobile phone. The unified identity may be a media access control (media access control, MAC) address of the mobile phone, an integrate circuit card identity (integrate circuit card identity, ICCID), or another existing identity. For still another example, the mobile terminal 130 is a mobile phone. The unified identity may be an OAID of the mobile phone. Alternatively, the unified identity may be an identifier related to an identifier in the conventional technology. For example, a core terminal 203 may generate the unified identity based on the identifier in the conventional technology. For example, the core terminal 203 is a mobile phone. The mobile phone may extract some content of an existing identifier such as a device serial number (for example, an IMEI), a MAC address, an ICCID, or an OAID of the mobile phone, and use the extracted content as the unified identity. For another example, the core terminal 203 is a mobile phone. The mobile phone may combine existing identifiers of the mobile phone to generate the unified identity.

In addition, in some embodiments of this application, the unified identity may be an identifier preset when the mobile terminal 130 is delivered from a factory, and the mobile terminal 130 may obtain the unified identity when being powered on for the first time. It may also be understood that the mobile terminal 130 generates the unified identity when being powered on for the first time.

In some other embodiments of this application, the unified identity may be an identifier generated after the mobile terminal 130 is powered on for the first time. For example, the mobile terminal 130 generates the unified identity after determining that the preset condition is met. For example, the mobile terminal 130 is a mobile phone. When determining that the mobile phone establishes a trusted connection to another device for the first time, the mobile phone generates a unified identity, for example, a unified identity 1. Specifically, the mobile phone may generate the unified identity 1 in a process of establishing the trusted connection to the another device, or may generate the unified identity 1 after establishing the trusted connection to the another device.

For example, the mobile phone requests to access a Wi-Fi network provided by a wireless router. After detecting a Wi-Fi password entered by the user, the mobile phone sends the Wi-Fi password to a Wi-Fi router. After verifying that the Wi-Fi password is valid, the Wi-Fi router establishes a Wi-Fi connection to the mobile phone. Because the Wi-Fi connection is a connection established based on a user operation such as entering a Wi-Fi password by the user, the Wi-Fi connection is a trusted connection authenticated by the user. The mobile phone may generate a unified identity 1 after establishing a trusted connection to the Wi-Fi router, where the unified identity 1 corresponds to the mobile phone, and may be used to identify a user who uses the mobile phone, for example, a user 1.

For another example, the mobile phone requests to establish a Bluetooth connection to a vehicle-mounted device. The user separately performs a Bluetooth pairing operation on the mobile phone and the vehicle-mounted device, and the mobile phone establishes the Bluetooth connection to the vehicle-mounted device. Because the Bluetooth connection is a connection established based on a user operation such as performing pairing by the user, the Bluetooth connection is a trusted connection authenticated by the user. The mobile phone may generate a unified identity 1 after establishing a trusted connection to the vehicle-mounted device, where the unified identity 1 corresponds to the mobile phone, and may be used to identify a user 1 who uses the mobile phone.

In some other embodiments of this application, the mobile terminal 130 generates a unified identity after determining that a same user has used the mobile terminal for a period of time. For example, the mobile terminal 130 is a mobile phone. After a user purchases a mobile phone, the user may not use the mobile phone but give the mobile phone to another user. Therefore, the newly purchased mobile phone may not generate a unified identity temporarily. The mobile phone may determine, based on a preset algorithm model and a use characteristic such as a use habit, a use manner, or a use frequency of the user, that the same user has used the mobile phone for a period of time, and then generate a unified identity used to identify the user. In some other embodiments of this application, the mobile terminal 130 may generate a unified identity according to an instruction of a user. For example, the mobile terminal 130 is a mobile phone. The user may trigger a corresponding option on a setting menu of the mobile phone, to indicate the mobile phone to generate a unified identity.

S308: The server 110 receives the exposure data of the advertising device 120 from a plurality of mobile terminals 130, and collects, based on the received exposure data, statistics about exposure traffic and an audience of the electronic advertisement played by the advertising device 120.

The exposure traffic is a quantity of users who have watched the electronic advertisement played by the advertising device 120, and the audience is a group of people who have watched the electronic advertisement played by the advertising device 120. It should be noted that, for a method in which the server 110 collects, based on the exposure data of the advertising device 120, statistics about the exposure traffic and the audience of the electronic advertisement played by the advertising device 120, refer to related descriptions in the foregoing embodiment. Details are not described herein again in this embodiment.

This embodiment of this application provides a method for collecting statistics about exposure data. According to this method, the exposure data of the electronic advertisement is obtained without installing the surveillance camera on the advertising device 120. The mobile terminal of the user reports the exposure data to the server, and the reporting may have legal authorization of the user. Therefore, there is no problem of invading user privacy. In other words, according to the method in this embodiment of this application, the exposure data of the electronic advertisement played by the advertising device 120 can be obtained through statistics collection without invading user privacy.

Further, the exposure data reported by the mobile terminal 130 to the server 110 is obtained based on the radio signal that is broadcast by the advertising device 120 and real-time location information of the mobile terminal 130, and no human being participates in a process in which the mobile terminal 130 obtains the exposure data and reports the exposure data to the server 110. Therefore, accuracy and reliability of the exposure data of the electronic advertisement can be ensured.

In an implementation (b) of Embodiment 1, the radio signal may not only include a first identifier of the advertising device 120 and orientation and location information of the advertising device 120, but also include an identifier of an electronic advertisement being played by the advertising device 120.

An identifier (ID) of an electronic advertisement is used to uniquely identify the electronic advertisement. Different electronic advertisements have different identifiers. For example, an identifier of an electronic advertisement of the C-brand children's interest class being played by the electronic billboard 410 shown in FIG. 4A is different from an identifier of an electronic advertisement of the A-brand sofa being played by the electronic billboard 510 shown in FIG. 5; the identifier of the electronic advertisement of the C-brand children's interest class is different from an identifier of an electronic advertisement of the B-brand vehicle being played by the electronic billboard 520 shown in FIG. 5; and the identifier of the electronic advertisement of the A-brand sofa is different from the identifier of the electronic advertisement of the B-brand vehicle.

It should be noted that, in the implementation (b), the preset distance range, the preset included angle range, and the preset exposure duration in S306 may be pre-stored in the mobile terminal 130. For a method in which the mobile terminal 130 obtains the preset distance range, the preset included angle range, and the preset exposure duration, refer to the descriptions in the implementation (a). Details are not described again in this embodiment.

In the implementation (b), the exposure data may include the first identifier of the advertising device 120, an identifier of the electronic advertisement (that is, the identifier of the electronic advertisement being played by the advertising device 120), and an identifier of the mobile terminal 130.

It may be understood that one advertising device 120 may play a plurality of electronic advertisements. For example, the advertising device 120 may play different electronic advertisements in different time periods. In the implementation (b), the server 110 may determine, based on effective exposure events reported by the plurality of mobile terminals 130, the exposure traffic and the audience of each electronic advertisement played by the advertising device 120.

It should be noted that, for a method in which the server 110 collects, based on the exposure data of the advertising device 120, statistics about the exposure traffic and the audience of the electronic advertisement played by the advertising device 120, refer to related descriptions in the foregoing embodiment. Details are not described herein again in this embodiment.

In an implementation (c) of Embodiment 1, the radio signal may not only include a first identifier of the advertising device 120, orientation and location information of the advertising device 120, and an identifier of the electronic advertisement being played by the advertising device 120, but also include the preset exposure duration, the preset distance range, and the preset included angle range. That is, in the implementation (c), the mobile terminal 130 may obtain the preset exposure duration, the preset distance range, and the preset included angle range from the radio signal that is broadcast by the advertising device 120.

In the implementation (c), the exposure data may include the first identifier of the advertising device 120 and an identifier of the mobile terminal 130. Alternatively, the exposure data may include the first identifier of the advertising device 120, an identifier of the mobile terminal 130, and an identifier of the electronic advertisement being played by the advertising device 120. The server 110 may collect, based on the received exposure data, statistics about exposure traffic and an audience of the electronic advertisement played by the advertising device 120.

In an implementation (d) of Embodiment 1, the radio signal may include a first identifier of the advertising device 120, orientation and location information, and the first exposure duration. In the implementation (d), the exposure data may include the first identifier of the advertising device 120, an identifier of the mobile terminal 130, and the first exposure duration.

The server 110 may collect, based on the first identifier of the advertising device 120 and the identifier of the mobile terminal 130 that are included in the exposure data, statistics about exposure traffic and an audience of the electronic advertisement played by the advertising device 120. The server 110 may determine, based on the first exposure duration included in the exposure data, duration in which the electronic advertisement played by the advertising device 120 generates effective exposure to the user, that is, duration in which the user watches the electronic advertisement played by the advertising device 120.

In another implementation of Embodiment 1, the radio signal may include a first identifier of the advertising device 120, orientation and location information, first exposure duration, and an identifier of the electronic advertisement being played by the advertising device 120. In this implementation, the exposure data may include the first identifier of the advertising device 120, an identifier of the mobile terminal 130, the first exposure duration, and the identifier of the electronic advertisement being played by the advertising device 120.

In another implementation of Embodiment 1, the radio signal may include a first identifier of the advertising device 120, orientation and location information, first exposure duration, an identifier of the electronic advertisement being played by the advertising device 120, preset exposure duration, a preset distance range, and a preset included angle range. In this implementation, the exposure data may include the first identifier of the advertising device 120, an identifier of the mobile terminal 130, the first exposure duration, and the identifier of the electronic advertisement being played by the advertising device 120.

For example, in S305, a method in which the mobile terminal 130 collects statistics about the first exposure duration may include S601 to S605. For example, as shown in FIG. 6A and FIG. 6B, S305 shown in FIG. 3 may include S601 to S605.

S601: The mobile terminal 130 determines whether an orientation and a location of the mobile terminal 130 relative to the advertising device 120 meet a preset condition.

That the orientation and the location of the mobile terminal 130 relative to the advertising device 120 meet the preset condition may be specifically as follows: A distance between the mobile terminal 130 and the advertising device 120 is within a preset distance range, the mobile terminal 130 is located on one side of an orientation of the advertising device 120, and an included angle between a movement direction of the mobile terminal 130 and the orientation of the advertising device 120 is within a preset included angle range.

After S601, if the orientation and the location of the mobile terminal 130 relative to the advertising device 120 meet the preset condition, the mobile terminal 130 may perform S602. If the orientation and the location of the mobile terminal 130 relative to the advertising device 120 do not meet the preset condition, the mobile terminal 130 may perform S303. For example, S601 may include S601a, S601b, and S601c.

S601a: The mobile terminal 130 determines, based on a location indicated by the orientation and location information in the radio signal and a location indicated by the real-time location information of the mobile terminal 130, whether the distance between the mobile terminal 130 and the advertising device 120 is within the preset distance range.

The radio signal is a radio signal from the advertising device 120 that is obtained by the mobile terminal 130 through listening. Specifically, the mobile terminal 130 may calculate a real-time distance between a real-time location of the mobile terminal 130 and a location of the advertising device 120, that is, the distance between the mobile terminal 130 and the advertising device 120, based on the real-time location information of the mobile terminal 130 and the orientation and location information in the radio signal. Then, the mobile terminal 130 may determine whether the real-time distance is within the preset distance range.

For example, it is assumed that as shown in FIG. 4A, R2 = 20 m, and R1 = 100 m, that is, the preset distance range may be 20 m to 100 m, a distance between the location 3 (that is, a location of the mobile phone A) and the point O (that is, a location of the electronic billboard 410) is 100 m, and a distance between the location c (that is, a location of the smartwatch B) and the point O (that is, the location of the electronic billboard 410) is 100 m.

For example, as shown in FIG. 4A, the mobile phone A obtains, through listening at the location 2, a radio signal that is broadcast by the electronic billboard 410. Because the distance between the location 3 (that is, the location of the mobile phone A) and the point O (that is, the location of the electronic billboard 410) is within R2 to R1 (that is, the preset distance range), when the mobile phone A moves from the location 2 to the location 3, the mobile phone A may determine that the distance between the mobile phone A and the electronic billboard 410 is within the preset distance range.

For another example, as shown in FIG. 4A, the smartwatch B obtains, through listening at the location b, a radio signal that is broadcast by the electronic billboard 410. Because the distance between the location c (that is, the location of the smartwatch B) and the point O (that is, the location of the electronic billboard 410) is within R2 to R1 (that is, the preset distance range), when the smartwatch B moves from the location b to the location c, the smartwatch B may determine that the distance between the smartwatch B and the electronic billboard 410 is within the preset distance range.

It should be noted that, when the distance between the mobile terminal 130 and the advertising device 120 is less than a transmission distance of the radio signal that is broadcast by the advertising device 120, the mobile terminal 130 can obtain, through listening, the radio signal that is broadcast by the advertising device 120. However, that the mobile terminal 130 can obtain, through listening, the radio signal that is broadcast by the advertising device 120 does not mean that the mobile terminal 130 enters the preset distance range centered on the location of the advertising device 120. For example, as shown in FIG. 4A, the mobile phone A may obtain, through listening at the location 2, a radio signal that is broadcast by the electronic billboard 410. However, a distance between the location 2 and the point O1 (that is, a location of the electronic billboard 410) is not within the preset distance range (R2 to R1).

With reference to the foregoing embodiment, it can be learned that, when the mobile phone A shown in FIG. 4A is located at the location 2, a user of the mobile phone A may not clearly and completely watch the electronic advertisement played by the electronic billboard 410. It may be understood that, only when the user can clearly and completely watch the electronic advertisement played by the electronic billboard 410, the user pays attention to the electronic advertisement played by the electronic billboard 410, and the electronic billboard 410 generates effective exposure to the user holding the mobile phone A.

In conclusion, after S601a, only if the distance between the mobile terminal 130 and the advertising device 120 is within the preset distance range, the advertising device 120 may generate effective exposure to the user holding the mobile terminal 130. In this case, the mobile terminal 130 may perform S601b.

If the distance between the mobile terminal 130 and the advertising device 120 is not within the preset distance range, the user of the mobile terminal 130 may not clearly watch the complete electronic advertisement played by the advertising device 120, and the advertising device 120 does not generate effective exposure to the user holding the mobile terminal 130. In this case, the mobile terminal 130 may perform S303.

It may be understood that, even if the distance between the mobile terminal 130 and the advertising device 120 is within the preset distance range, it is possible that the user holding the mobile terminal 130 cannot watch the electronic advertisement played by the advertising device 120. For example, as shown in FIG. 4A, a mobile phone C is located at a location 5, and a distance between the location 5 and a location of the electronic billboard 410 is within R2 to R1 (that is, the preset distance range). However, because the location 5 is on the back of a display of the electronic billboard 410, a user holding the mobile phone C cannot watch the electronic advertisement played by the electronic billboard 410.

S601b: The mobile terminal 130 determines, based on the location and an orientation that are indicated by the orientation and location information in the radio signal and the location indicated by the real-time location information, whether the mobile terminal 130 is located on one side of an orientation of the advertising device 120.

Specifically, if the mobile terminal 130 is located on the side of the orientation of the advertising device 120, it indicates that a possibility that the user holding the mobile terminal 130 can watch the electronic advertisement played by the advertising device 120 is high. For example, a vector Z1 shown in FIG. 4A is used to indicate an orientation of the electronic billboard 410, and the vector Z1 is perpendicular to a display of the electronic billboard 410. As shown in FIG. 4A, the mobile phone A or the smartwatch B is located on one side of the orientation of the electronic billboard 410. When a distance between the mobile phone A or the smartwatch B and the electronic billboard 410 is within R2 to R1 (that is, the preset distance range), a user holding the mobile phone A or the smartwatch B can watch the electronic advertisement played by the electronic billboard 410. In this case, the mobile terminal 130 may perform S601c.

If the mobile terminal 130 is located on the other side of the orientation of the advertising device 120, it indicates that the user holding the mobile terminal 130 cannot watch the electronic advertisement played by the advertising device 120. For example, as shown in FIG. 4A, if the mobile phone C is located on the other side of the orientation of the electronic billboard 410, a user holding the mobile phone C cannot watch the electronic advertisement played by the electronic billboard 410. In this case, the mobile terminal 130 may perform S303.

S601c: The mobile terminal 130 determines whether an included angle between the movement direction of the mobile terminal 130 and the orientation of the advertising device 120 is within a preset included angle range.

It may be understood that, even if the distance between the mobile terminal 130 and the advertising device 120 is within the preset distance range, and the mobile terminal 130 is located on the side of the orientation of the advertising device 120, it is possible that the user holding the mobile terminal 130 cannot watch the electronic advertisement played by the advertising device 120. For example, as shown in FIG. 4A, a smartwatch D may move from a location e to a location f. When the smartwatch D is located at the location f, a distance between the smartwatch D and the electronic billboard 410 is within a preset distance range, and the smartwatch D is located on one side of the orientation of the electronic billboard 410. However, a user holding the smartwatch D cannot completely and clearly watch the electronic advertisement played by the electronic billboard 410. In FIG. 4A, a reason why the user holding the smartwatch D cannot completely and clearly watch the electronic advertisement played by the electronic billboard 410 is that an included angle between a movement direction of the smartwatch D and an orientation of the electronic billboard 410 is not within the preset included angle range.

After S601c, if the included angle between the movement direction of the mobile terminal 130 and the orientation of the advertising device 120 is within the preset included angle range, it indicates that the advertising device 120 may generate effective exposure to the user holding the mobile terminal 130. In this case, the mobile terminal 130 may perform S602. If the included angle between the movement direction of the mobile terminal 130 and the orientation of the advertising device 120 is within the preset included angle range, it indicates that the advertising device 120 does not generate effective exposure to the user holding the mobile terminal 130. In this case, the mobile terminal 130 may perform S303.

S602: The mobile terminal 130 starts timing.

The mobile terminal 130 may include a timer. After S305c, if the included angle between the movement direction of the mobile terminal 130 and the orientation of the advertising device 120 is within the preset included angle range, the mobile terminal 130 may start a timer. After the timer is started, the real-time location and the movement direction of the mobile terminal 130 may change, and the mobile terminal 130 may continue to perform S603, to determine whether the orientation and the location of the mobile terminal 130 relative to the advertising device 120 meet the preset condition. Specifically, after S602, the method in this embodiment of this application may further include S603.

S603: The mobile terminal 130 determines whether the orientation and the location of the mobile terminal 130 relative to the advertising device 120 meet the preset condition.

It should be noted that for a specific method in which "the mobile terminal 130 determines whether the orientation and the location of the mobile terminal 130 relative to the advertising device 120 meet the preset condition" in S603, refer to related descriptions in S601. Details are not described herein again in this embodiment of this application.

Specifically, after S603, if the orientation and the location of the mobile terminal 130 relative to the advertising device 120 meet the preset condition, the mobile terminal 130 performs S604. If the orientation and the location of the mobile terminal 130 relative to the advertising device 120 do not meet the preset condition, the mobile terminal 130 performs S605 and S606.

S604: The mobile terminal 130 continues timing, and performs S603.

It may be understood that, after S603, if the orientation and the location of the mobile terminal 130 relative to the advertising device 120 meet the preset condition, it indicates that the user holding the mobile terminal 130 still pays attention to the electronic advertisement played by the advertising device 120, that is, the electronic advertisement played by the advertising device 120 still generates effective exposure to the user holding the mobile terminal 130. In this case, the timer may continue timing.

S605: The mobile terminal 130 obtains timing duration to obtain the first exposure duration, and resets the timing.

It may be understood that, after S603, if the orientation and the location of the mobile terminal 130 relative to the advertising device 120 do not meet the preset condition, it indicates that the user holding the mobile terminal 130 no longer pays attention to the electronic advertisement played by the advertising device 120, that is, the electronic advertisement played by the advertising device 120 no longer generates effective exposure to the user holding the mobile terminal 130. In this case, the mobile terminal 130 may obtain the timing duration of the timer, to obtain the first exposure duration. In other words, the timing duration of the timer is the first exposure duration.

It should be noted that, in this embodiment of this application, when determining whether the orientation and the location of the mobile terminal 130 relative to the advertising device 120 meet the preset condition, the mobile terminal 130 may first determine whether the mobile terminal 130 is located on one side of the orientation of the advertising device 120, or may first determine whether the distance between the mobile terminal 130 and the advertising device 120 is within the preset distance range, or may first determine whether the included angle between the movement direction of the mobile terminal 130 and the orientation of the advertising device 120 is within the preset included angle range. This is not limited in this embodiment of this application.

For example, in some embodiments, the mobile terminal 130 may first perform S601b. After S601b, if the mobile terminal 130 is located on one side of the orientation of the advertising device 120, the mobile terminal 130 performs S601a. After S601a, if the distance between the mobile terminal 130 and the advertising device 120 is within the preset distance range, the mobile terminal 130 performs S601c.

In this embodiment of this application, the mobile terminal 130 reports an effective exposure event to the server 110 when the orientation and the location of the mobile terminal 130 relative to the advertising device 120 meet the preset condition. Whether the orientation and the location of the mobile terminal 130 relative to the advertising device 120 meet the preset condition is determined based on the radio signal that is broadcast by the advertising device 120 and the real-time location information of the mobile terminal 130. Therefore, accuracy and reliability of the effective exposure event can be ensured. In other words, according to the method in this embodiment of this application, accuracy and reliability of the exposure data obtained through statistics collection can be improved.

It may be understood that, the mobile terminal 130 listens to the radio signal, and may obtain, through listening, radio signals that are broadcast by a plurality of advertising devices. However, some advertising devices may not be delivered by the server 110. Therefore, the mobile terminal 130 does not need to report effective exposure events of the advertising devices to the server 110. Even, after obtaining the radio signals of the advertising devices through listening, the mobile terminal 130 does not need to determine whether the advertising device generates effective exposure to the user holding the mobile terminal 130. In this case, the server 110 may periodically indicate device information of a plurality of to-be-monitored advertising devices to the mobile terminal 130, so that the mobile terminal 130 can identify a to-be-monitored advertising device based on the device information. Then, the mobile terminal 130 may report exposure data of the to-be-monitored advertising device to the server 110, but does not report exposure data of a non-to-be-monitored advertising device (for example, an advertising device other than the to-be-monitored advertising device) to the server 110.

Specifically, the method in this embodiment of this application may further include S701 to S703. For example, as shown in FIG. 7A, before S303 shown in FIG. 3, the method in this embodiment of this application may further include S701 to S703.

S701: The server 110 obtains device information of a plurality of to-be-monitored advertising devices.

For example, the server 110 may periodically obtain the device information of the plurality of to-be-monitored advertising devices, and send the device information of the plurality of to-be-monitored advertising devices to the mobile terminal 130. For example, a period in which the server 110 obtains the device information of the plurality of to-be-monitored advertising devices may be the foregoing preset period.

S702: The server 110 sends the device information of the plurality of to-be-monitored advertising devices to the mobile terminal 130.

For data included in the device information of the to-be-monitored adverting device, refer to related descriptions in the following embodiments. Details are not described herein in this embodiment of this application.

S703: The mobile terminal 130 receives the device information of the plurality of to-be-monitored advertising devices from the server 110, and stores the device information of the plurality of to-be-monitored advertising devices.

It may be understood that the advertising device 120 may be a to-be-monitored advertising device. Certainly, the advertising device 120 may not be a to-be-monitored advertising device. To prevent the mobile terminal 130 from reporting exposure data of a non-to-be-monitored advertising device to the server 110, the mobile terminal 130 may perform S704 after obtaining the foregoing radio signal through listening (that is, performing S303) and before reporting the exposure event to the server 110 (that is, performing S304). Specifically, after S303, the method in this embodiment of this application may further include S704. For example, as shown in FIG. 7A, the method in this embodiment of this application further includes S704.

S704: The mobile terminal 130 determines whether the radio signal from the advertising device 120 is broadcast by a to-be-monitored advertising device.

For a method in which the mobile terminal 130 determines, based on the device information of the plurality of to-be-monitored advertising devices, whether the radio signal is broadcast by the to-be-monitored advertising device, refer to related descriptions in the following embodiment. Details are not described herein in this embodiment of this application.

Specifically, if the radio signal is broadcast by the to-be-monitored advertising device, the mobile terminal 130 may perform S307. If the radio signal obtained by the mobile terminal 130 through listening is not broadcast by the to-be-monitored advertising device, the mobile terminal 130 does not send exposure data of the advertising device 120 to the server 110, and the mobile terminal 130 may perform S303.

In this embodiment of this application, the mobile terminal 130 detects and reports an effective exposure event only for the to-be-monitored advertising device indicated by the server 110. In this way, not only power consumption of the mobile terminal 130 can be reduced, but also the effective exposure event of the to-be-monitored advertising device indicated by the server 110 can be reported to the server 110 in a targeted manner.

In the following embodiment, the device information of the to-be-monitored advertising device in S701 to S703 and a specific method in which the mobile terminal 130 determines whether the radio signal from the advertising device 120 is broadcast by the to-be-monitored advertising device are described.

In an implementation (i), the device information of the to-be-monitored advertising device may include a first identifier of the to-be-monitored advertising device. For detailed descriptions of the first identifier of the to-be-monitored advertising device, refer to descriptions of the first identifier of the advertising device 120 in the foregoing embodiment. Details are not described herein again in this embodiment.

The radio signal includes the first identifier of the advertising device 120, and the device information of the to-be-monitored advertising device that is stored in the mobile terminal 130 includes the first identifier of the to-be-monitored advertising device. Therefore, in S704, the mobile terminal 130 may compare the first identifier of the advertising device 120 that is carried in the radio signal with the first identifier of the to-be-monitored advertising device. If the first identifier of the advertising device 120 is the same as a first identifier of any to-be-monitored advertising device, it indicates that the advertising device 120 is a to-be-monitored advertising device, and the radio signal is broadcast by the to-be-monitored advertising device. If the first identifier of the advertising device 120 is different from first identifiers of all to-be-monitored advertising devices, it indicates that the advertising device 120 is not a to-be-monitored advertising device, and the radio signal is not broadcast by the to-be-monitored advertising device.

In an implementation (ii), the device information of the to-be-monitored advertising device may include a second identifier of the to-be-monitored advertising device.

In a first case, the second identifier of the to-be-monitored advertising device may be a radio network identifier of the advertising device. The radio signal that is broadcast by a wireless device (for example, the advertising device) carries a radio network identifier of the wireless device. Different wireless devices have different radio network identifiers. For example, the radio network identifier may be a MAC address of the advertising device. For example, the MAC address of the advertising device may be 08:00:20:0A:8C:6D.

In a second case, the second identifier of the to-be-monitored advertising device may be prefix information of a radio network identifier of the to-be-monitored advertising device. The prefix information of the radio network identifier may be first N characters of the radio network identifier. Herein, N ≥ 2, and N is a positive integer. Prefix information (that is, first N characters) of radio network identifiers of a plurality of advertising devices generated by a same manufacturer is the same. For example, the radio network identifier is a MAC address, and N = 6. Assuming that a radio network identifier of the electronic billboard 410 shown in FIG. 4A is 08:00:20:0A:8C:6D, a second identifier of the electronic billboard 410 is 08:00:20.

To be specific, the second identifier (that is, the prefix information of the radio network identifier) of the to-be-monitored advertising device may be used to indicate a plurality of devices whose prefix information of radio network identifiers is the second identifier. To be specific, the second identifier of the to-be-monitored advertising device may indicate a plurality of advertising devices whose prefix information of radio network identifiers is the second identifier (that is, a device number of a section corresponding to the second identifier). In this way, the server 110 may indicate the second identifier of the to-be-monitored advertising device to the mobile terminal 130, to indicate the mobile terminal 130 to monitor the plurality of advertising devices whose prefix information of the radio network identifiers is the second identifier.

It may be understood that the radio signal that is broadcast by a wireless device (for example, the advertising device 120) carries a radio network identifier of the wireless device. Different wireless devices have different radio network identifiers. To be specific, the radio signal that is broadcast by the advertising device 120 further includes a second identifier of the advertising device 120. For example, when the radio signal is a Bluetooth beacon frame or a Wi-Fi beacon frame, the radio network identifier may be a beacon identifier (that is, a beacon ID) of the advertising device 120. It should be noted that, for detailed descriptions of the second identifier of the advertising device 120, refer to descriptions of the second identifier of the to-be-monitored advertising device in the foregoing embodiment. Details are not described herein again in this embodiment.

The radio signal includes the second identifier of the advertising device 120, and the device information of the to-be-monitored advertising device that is stored in the mobile terminal 130 includes the second identifier of the to-be-monitored advertising device. Therefore, in S704, the mobile terminal 130 may compare the second identifier of the advertising device 120 that is carried in the radio signal with the second identifier of the to-be-monitored advertising device. If the second identifier of the advertising device 120 is the same as a second identifier of any to-be-monitored advertising device, it indicates that the advertising device 120 is a to-be-monitored advertising device, and the radio signal is broadcast by the to-be-monitored advertising device. If the second identifier of the advertising device 120 is different from second identifiers of all to-be-monitored advertising devices, it indicates that the advertising device 120 is not a to-be-monitored advertising device, and the radio signal is not broadcast by the to-be-monitored advertising device.

In an implementation (iii), the device information of the to-be-monitored advertising device may include a first identifier and a second identifier of the to-be-monitored advertising device.

In this embodiment, the mobile terminal 130 performs S704, may compare the second identifier of the advertising device 120 that is carried in the radio signal with the second identifier of the to-be-monitored advertising device, and compare the first identifier of the advertising device 120 that is carried in the radio signal with the first identifier of the to-be-monitored advertising device. If the second identifier of the advertising device 120 is the same as a second identifier of any to-be-monitored advertising device, and the first identifier of the advertising device 120 is the same as a first identifier of a same to-be-monitored advertising device, it indicates that the advertising device 120 is a to-be-monitored advertising device, and the radio signal is broadcast by the to-be-monitored advertising device.

Optionally, with reference to any one of the implementation (i), the implementation (ii), and the implementation (iii), the device information of the to-be-monitored advertising device may further include the preset distance range, the preset exposure duration, and the preset included angle range. To be specific, the server 110 may send the preset distance range, the preset exposure duration, and the preset included angle range to the mobile terminal 130. The mobile terminal 130 may store the preset distance range, the preset exposure duration, and the preset included angle range from the server 110, and then determine effective exposure by using the stored preset distance range, the stored preset exposure duration, and the stored preset included angle range.

The server 110 may serve as an advertising platform to receive the first identifier, the second identifier, and the orientation and location information of the advertising device that are entered by a media party on the advertising platform.

In this embodiment, a method in which the server 110 serves as the advertising platform to receive an advertisement slot (that is, an advertising device) registered by the media party, and a method in which the server 110 serves as the advertising platform to receive data such as a first identifier, a second identifier, and orientation and location information of the registered advertisement slot (that is, the advertising device, such as a to-be-monitored advertising device) entered by the media party are described.

It can be learned from the foregoing embodiment that the server 110 may provide the advertising platform, and the advertising platform provides an advertisement slot (that is, an advertising device) registration service for the media party. The advertising platform provided by the server 110 for the media party may be referred to as a supplied side platform (supplied side platform, SSP). The media party may register an advertisement slot on the advertising platform by using the first electronic device 140 shown in FIG. 1B. After the media party registers the advertisement slot on the advertising platform by using the first electronic device 140, if the server 110 delivers an advertisement to the advertisement slot, the media party can obtain benefits. In a process of registering the advertisement slot (that is, the advertising device) on the advertising platform provided by the server 110, the media party can enter data such as a first identifier, a second identifier, and orientation and location information of the registered advertising device (for example, a to-be-monitored advertising device) on the advertising platform.

For example, the first electronic device 140 may log in to the advertising platform provided by the server 110, and display a home page of the advertising platform. The home page of the advertising platform may be a web page, or may be a home page of the first app. The server 110 serves as a server of the web page or the first app of the advertising platform. The home page of the advertising platform may provide an advertisement slot registration service and a registered advertisement slot management service for the media party.

For example, the first electronic device 140 is a PC 800 shown in FIG. 8A. The PC 800 may display a home page of an advertising platform. The home page of the advertising platform may include an advertisement slot registration area 802 and an advertisement slot management area 801.

The advertisement slot registration area 802 includes an "advertisement slot registration" option 803. The PC 800 may display, in response to a click operation performed by a user on the "advertisement slot registration" option 803, an advertisement slot registration interface 804 shown in FIG. 8B. The advertisement slot registration interface 804 includes a first identifier entry box 805, a second identifier entry box 806, a location entry box 807, and an orientation entry box 808. The first identifier entry box 805 is used to enter a first identifier of an advertising device. The second identifier entry box 806 is used to enter a second identifier of the advertising device. The location entry box 807 is used to enter location information (for example, latitude and longitude) of the advertising device. The orientation entry box 808 is used to enter orientation information of the advertising device.

Certainly, as the advertising platform, the server 110 may further receive preset exposure duration, a preset distance range, and a preset included angle range that are entered by a media party on the advertising platform. For example, the advertisement slot registration interface 804 may further include other entry boxes, for example, entry boxes of data such as the preset distance range, the preset exposure duration, and the preset included angle range, which are not shown in the accompanying drawing.

The advertisement slot registration interface 804 shown in FIG. 8B further includes a "Back" button and a "Save" button. The PC 800 may display the home page of the advertising platform in response to a click operation (for example, a single-click operation) performed by the user on the "Back" button. The PC 800 may send, to the server 110 in response to a click operation (for example, a single-click operation) performed by the user on the "Save" button, the device information of the advertising device that is entered by the media party in the advertisement slot registration interface 804. In this way, the server 110 can receive the device information of the advertising device.

The advertisement slot management area 801 shown in FIG. 8A includes a plurality of advertisement slot options, for example, an "advertisement slot 1" option, an "advertisement slot 2" option, an "advertisement slot 3" option, and an "advertisement slot 4" option. Each advertisement slot option corresponds to one advertising device that has registered with the server 110, and the advertising device that has registered with the server may be used for delivery of an electronic advertisement. For example, the "advertisement slot 1" option, the "advertisement slot 2" option, and the "advertisement slot 3" option each correspond to an advertising device to which an electronic advertisement has been delivered, and the "advertisement slot 4" option corresponds to an advertising device to which no electronic advertisement has been delivered. In response to a click operation (for example, a single-click operation) performed by the media party on an advertisement slot option, the PC 800 may query device information of a corresponding advertising device from the server 110, and display the found device information. If an electronic advertisement has been delivered on the advertising device, the PC 800 may further query related information of the electronic advertisement delivered on the advertising device from the server 110 and display the related information, which is not shown in the accompanying drawing.

It should be noted that, in this embodiment of this application, the page or the interface of the advertising platform provided by the server 110 includes but is not limited to the page or the interface shown in FIG. 8A and FIG. 8B. A specific form of the page or the interface of the advertising platform provided by the server 110 is not limited in this embodiment of this application.

In some other embodiments, the mobile terminal 130 may obtain, through listening, a plurality of same radio signals that are broadcast by the advertising device 120. In this case, the mobile terminal 130 may perform S304 shown in FIG. 3 or FIG. 6A or S704 shown in FIG. 7A for the plurality of same radio signals obtained through listening. In this way, power consumption of the mobile terminal 130 is increased. In addition, for the plurality of same radio signals, the mobile terminal 130 reports an effective exposure event to the server 110 for a plurality of times. In this way, a same mobile terminal reports a plurality of pieces of same exposure data to the server 110, and the exposure data has high repeatability, which may affect accuracy of advertisement effect analysis.

To resolve the foregoing problem, the mobile terminal 130 may perform repetitive detection on the radio signal obtained through listening. Specifically, after the mobile terminal 130 obtains a radio signal (for example, a radio signal 1) through listening, if the mobile terminal 130 obtains the radio signal 1 again through listening within preset duration, the mobile terminal 130 does not perform S304 shown in FIG. 3 or FIG. 6A or S704 shown in FIG. 7A, and the mobile terminal 130 may discard the radio signal 1.

Specifically, after S303, the method in this embodiment of this application may further include the following step: After obtaining the radio signal 1 through listening, the mobile terminal 130 stores the radio signal 1. After the mobile terminal 130 obtains a next radio signal (for example, a radio signal 2) through listening, the mobile terminal 130 may determine whether the radio signal 2 is the same as the radio signal 1 stored in the mobile terminal 130. If the radio signal 2 is different from any radio signal stored in the mobile terminal 130, the mobile terminal 130 may perform S304 shown in FIG. 3 or FIG. 6A or S704 shown in FIG. 7A. If the radio signal 2 is the same as any radio signal (for example, the radio signal 1) stored in the mobile terminal 130, the mobile terminal 130 does not perform S304 shown in FIG. 3 or FIG. 6A or S704 shown in FIG. 7A, and the mobile terminal 130 may discard the second radio signal. The mobile terminal 130 may delete the radio signal 1 after the preset duration. For example, the preset duration may be a current day or n hours (h) from a time point at which the mobile terminal 130 obtains a radio signal through listening. For example, n may be any value such as 1, 2, 3, 6, or 10.

It should be noted that, in this embodiment of this application, that the radio signal 1 is the same as the radio signal 2 may include: A radio network identifier carried in the radio signal 1 is the same as a radio network identifier carried in the radio signal 2. Alternatively, a radio network identifier carried in the radio signal 1 is the same as a radio network identifier carried in the radio signal 2, and related data of the advertising device that is included in the radio signal 1 is the same as related data of the advertising device that is included in the radio signal 2.

For detailed descriptions of the related data of the advertising device that is included in the radio signal, refer to descriptions in the foregoing embodiment. Details are not described herein again in this embodiment of this application.

In this embodiment of this application, the mobile terminal 130 may perform repetitive detection on the radio signal obtained through listening. In this way, power consumption of the mobile terminal 130 can be reduced. In addition, a same mobile terminal 130 can be prevented from reporting a plurality of pieces of same exposure data to the server 110, and accuracy of advertisement effect analysis can be improved.

### Embodiment 2

The advertising device 120 may not have a function of broadcasting a radio signal. Alternatively, because some advertising devices (for example, advertising devices installed on a television station) are far away from the mobile terminal 130, even if the advertising device has a function of broadcasting a radio signal, the mobile terminal 130 cannot obtain, through listening, the radio signal that is broadcast by the advertising device. In this way, the mobile terminal 130 cannot determine, by listening to the radio signal and based on orientation and location information of the advertising device 120 that is included in the radio signal, whether the advertising device 120 generates effective exposure to a user holding the mobile terminal 130.

In this case, the mobile terminal 130 may pre-store a first identifier and the orientation and location information of the advertising device 120 (for example, a to-be-monitored advertising device). In this way, even if the mobile terminal 130 cannot obtain, through listening, the radio signal that is broadcast by the advertising device 120, the mobile terminal 130 may determine, based on the orientation and location information of the advertising device 120 and real-time location information of the mobile terminal 130, whether the advertising device 120 generates effective exposure to the user holding the mobile terminal 130.

An embodiment of this application provides a method for collecting statistics about exposure data. As shown in FIG. 9, the method for collecting statistics about exposure data may include S901 to S905.

S901: The mobile terminal 130 collects real-time location information of the mobile terminal 130, where the real-time location information is used to determine a location and a movement direction of the mobile terminal 130.

It may be understood that the location of the mobile terminal 130 may change as a user of the mobile terminal 130 moves. In this embodiment of this application, the mobile terminal 130 may periodically collect the real-time location information of the mobile terminal 130. In this way, the mobile terminal 130 may not only determine the location of the mobile terminal 130 based on the collected real-time location information, but also determine the movement direction of the mobile terminal 130 based on a change of the real-time location information.

For example, after a positioning function (for example, a GPS positioning function) of the mobile terminal 130 is enabled, the mobile terminal 130 can collect the real-time location information of the mobile terminal 130.

S902: When a distance between the mobile terminal 130 and the advertising device 120 is within a preset distance range, the mobile terminal 130 collects statistics about first exposure duration of the advertising device 120 for the mobile terminal 130.

The first exposure duration is duration in which an orientation and a location of the mobile terminal 130 relative to the advertising device 120 meet a preset condition. It may be understood that, only when the mobile terminal 130 is close to the advertising device 120 (for example, the distance between the mobile terminal 130 and the advertising device 120 is within the preset distance range), the orientation and the location of the mobile terminal 130 relative to the advertising device 120 may meet the preset condition.

In this embodiment of this application, that the orientation and the location of the mobile terminal 130 relative to the advertising device 120 meet the preset condition may be specifically as follows: The distance between the mobile terminal 130 and the advertising device 120 is within the preset distance range, the mobile terminal 130 is located on one side of an orientation of the advertising device 120, and an included angle between a movement direction of the mobile terminal 130 and the orientation of the advertising device 120 is within a preset included angle range.

It should be noted that for a specific implementation of S902, refer to detailed descriptions of S305 and S601 to S605 in the foregoing embodiments. Details are not described herein again in this embodiment of this application.

It may be understood that, if the orientation and the location of the mobile terminal 130 relative to the advertising device 120 meet the preset condition, it indicates that a user holding the mobile terminal 130 may pay attention to the advertising device 120, that is, the advertising device 120 may generate effective exposure to the user holding the mobile terminal. If the orientation and the location of the mobile terminal 130 relative to the advertising device 120 do not meet the preset condition, it indicates that a user holding the mobile terminal 130 does not pay attention to the mobile terminal 130, that is, the advertising device 120 does not generate effective exposure to the user holding the mobile terminal 130.

It should be noted that the preset distance range, the preset included angle range, and preset exposure duration in S903 may be pre-stored in the mobile terminal 130. For example, the preset distance range, the preset included angle range, and the preset exposure duration may be sent by the server 110 to the mobile terminal 130. After receiving the preset distance range, the preset included angle range, and the preset exposure duration from the server 110, the mobile terminal 130 may store the preset distance range, the preset included angle range, and the preset exposure duration. For another example, the preset distance range, the preset included angle range, and the preset exposure duration may be set by the user on the mobile terminal 130.

S903: The mobile terminal 130 determines whether the first exposure duration is greater than the preset exposure duration.

If the first exposure duration is greater than the preset exposure duration, the mobile terminal 130 may perform S904. If the first exposure duration is less than the preset exposure duration, the mobile terminal 130 may perform S901.

S904: The mobile terminal 130 sends exposure data of the advertising device 120 to the server 110.

For specific content of the exposure data of the advertising device 120, refer to detailed descriptions in Embodiment 1. Details are not described herein again in this embodiment of this application.

S905: The server 110 receives the exposure data of the advertising device 120 from a plurality of mobile terminals 130, and collects, based on the received exposure data, statistics about exposure traffic and an audience of an electronic advertisement played by the advertising device 120.

The exposure traffic is a quantity of users who have watched the electronic advertisement played by the advertising device 120, and the audience is a group of people who have watched the electronic advertisement played by the advertising device 120. It should be noted that, for a method in which the server 110 collects, based on the exposure data of the advertising device 120, statistics about the exposure traffic and the audience of the electronic advertisement played by the advertising device 120, refer to related descriptions in the foregoing embodiment. Details are not described herein again in this embodiment.

Optionally, as shown in FIG. 9, before S901, the method in this embodiment of this application may further include S1001 to S 1003.

S 1001: The server 110 obtains device information of a plurality of to-be-monitored advertising devices.

S1002: The server 110 sends the device information of the plurality of to-be-monitored advertising devices to the mobile terminal 130.

S1003: The mobile terminal 130 receives the device information of the plurality of to-be-monitored advertising devices from the server 110, and stores the device information of the plurality of to-be-monitored advertising devices.

For detailed descriptions of S1001 to S1003, refer to related descriptions of S701 to S703 in Embodiment 1. Details are not described herein again in this embodiment. However, the device information of the to-be-monitored advertising device in S 1001 to S 1003 may be different from the device information of the to-be-monitored advertising device in S701 to S703.

The device information of the to-be-monitored advertising device in S 1001 to S 1003 is described in the following embodiment.

In an implementation (1), the device information of the to-be-monitored advertising device may include a first identifier and orientation and location information of the to-be-monitored advertising device. For detailed descriptions of the first identifier and the orientation and location information of the to-be-monitored advertising device, refer to related descriptions in Embodiment 1. Details are not described herein again in this embodiment.

It should be noted that, in the implementation (1), the preset distance range, the preset exposure duration, and the preset included angle range may be pre-stored in the mobile terminal 130. For example, the preset distance range, the preset exposure duration, and the preset included angle range may be set by the user on the mobile terminal 130.

In an implementation (2), the device information of the to-be-monitored advertising device may not only include a first identifier and orientation and location information of the to-be-monitored advertising device, but also include the preset distance range, the preset exposure duration, and the preset included angle range.

It should be noted that, in Embodiment 2, for a method in which the server 110 enters data such as the first identifier and the orientation and location information of the advertising device, refer to related descriptions in Embodiment 1. Details are not described herein again in this embodiment.

This embodiment of this application provides a method for collecting statistics about exposure data. According to this method, the exposure data of the electronic advertisement is obtained without installing a surveillance camera on the advertising device 120. Therefore, there is no risk of invading user privacy. In other words, according to the method in this embodiment of this application, the exposure data of the electronic advertisement played by the advertising device 120 can be obtained through statistics collection without invading user privacy.

Further, the exposure data reported by the mobile terminal 130 to the server 110 is obtained based on the orientation and location information of the advertising device 120 that is received from the server 110 and the real-time location information of the mobile terminal 130, and no human being participates in a process in which the mobile terminal 130 obtains the exposure data and reports the exposure data to the server 110. Therefore, accuracy and reliability of the exposure data of the electronic advertisement can be ensured.

According to the solution of Embodiment 1 or Embodiment 2, the server 110 obtains the exposure traffic and the audience of the advertising device through statistics collection based on effective exposure events reported by a plurality of mobile terminals. Then, the server 110 may provide an advertisement delivery service for a brand advertiser based on exposure traffic and an audience of each electronic advertisement played by each advertising device 120.

In this embodiment of this application, as an advertising platform, the server 110 may provide the advertisement delivery service for the brand advertiser. For example, the server 110 may provide the following advertisement delivery services for the brand advertiser based on the received exposure data: prediction of the exposure traffic of the electronic advertisement played by the advertising device, prediction of the audience of the electronic advertisement played by the advertising device, query of the exposure traffic of the electronic advertisement played by each advertising device, query of the audience of the electronic advertisement played by each advertising device, query of a quantitative advertisement effect analysis report of the electronic advertisement, and the like.

For example, the server 110 may provide an advertising platform, and the advertising platform provides an advertisement delivery service for a brand advertiser. The brand advertiser may deliver an electronic advertisement on the advertising platform by using the second electronic device 150 shown in FIG. 1B. In addition, the brand advertiser may experience the advertisement delivery service on the advertising platform by using the second electronic device 150 shown in FIG. 1B.

For example, the second electronic device 150 may log in to the advertising platform provided by the server 110, and display a home page of the advertising platform. The home page of the advertising platform may be a web page, or may be a home page of the second app. The server 110 serves as a server of the web page or the second app of the advertising platform. The home page of the advertising platform may provide an advertisement delivery service for a brand advertiser.

For example, the second electronic device 150 is a PC 1000 shown in FIG. 10A. As shown in FIG. 10A, the PC 1000 may display a home page of an advertising platform. The home page of the advertising platform may include an advertisement delivery area 1002 and a delivered advertisement management area 1001. The advertisement delivery area 1002 includes an "advertisement delivery" option 1003. The PC 1000 may display, in response to a click operation performed by a user on the "advertisement delivery" option 1003, an advertisement delivery interface 1004 shown in (a) in FIG. 10B.

The advertisement delivery interface 1004 shown in (a) in FIG. 10B includes an advertisement resource adding option 1005, an exposure traffic and audience prediction button 1006, and a delivery policy setting option 1007.

The advertisement resource adding option 1005 is used to add an advertisement resource of a to-be-delivered electronic advertisement. The delivery policy setting option 1007 is used to set a delivery policy for a to-be-delivered electronic advertisement, for example, select an advertisement slot (that is, an advertising device) and an advertisement play time period. After the advertisement resource of the electronic advertisement is added in the advertisement resource adding option 1005, and the delivery policy is set in the delivery policy setting option 1007, the exposure traffic and audience prediction button 1006 is used to trigger the server 110 to predict exposure traffic and an audience generated after the electronic advertisement is delivered according to the delivery policy.

For example, it is assumed that a brand advertiser adds the advertisement resource of the electronic advertisement in the advertisement resource adding option 1005, and sets the delivery policy in the delivery policy setting option 1007. The PC 1000 may request, in response to a click operation (for example, a single-click operation) performed on the exposure traffic and audience prediction button 1006, the server 110 to predict the exposure traffic and the audience generated after the electronic advertisement is delivered according to the delivery policy. The PC 1000 may send a prediction request to the server 110, to request the server 110 to predict the exposure traffic and the audience generated after the electronic advertisement is delivered according to the delivery policy. The prediction request includes the advertisement resource and the delivery policy of the electronic advertisement.

The server 110 may receive effective exposure events reported by a plurality of mobile terminals 130, and store exposure data of the effective exposure events. The exposure data stored in the server 110 may be referred to as historical exposure data.

It may be understood that the server 110 may determine an advertisement type of the electronic advertisement based on the advertisement resource of the electronic advertisement, for example, an advertisement of an electronic product (for example, a mobile phone), an advertisement of a household appliance, an advertisement of clothing, shoes, and boots, an advertisement of home life, or an advertisement of beauty and makeup. The server 110 may determine, according to the delivery policy of the electronic advertisement, an advertisement slot for playing the electronic advertisement and a play time period of the electronic advertisement. The server 110 may analyze the foregoing historical exposure data to obtain exposure traffic and an audience of the electronic advertisement of the foregoing advertisement type that are generated when the electronic advertisement is played in the play time period on the advertisement slot indicated by the delivery policy. Then, the server 110 may return a prediction result to the PC 1000.

The PC 1000 may receive and display the prediction result of the server 110. For example, the PC 1000 may display a prediction result interface 1008 shown in (b) in FIG. 10B. The prediction result interface 1008 includes exposure traffic and audience prediction data generated after the electronic advertisement is delivered according to the delivery policy. The prediction result interface 1008 further includes a "Deliver" button 1009 and a "Back" button 1010. A brand advertiser may determine whether the prediction result shown in the prediction result interface 1008 meets an expected result of the brand advertiser. If the prediction result meets the expected result of the brand advertiser, the brand advertiser may click the "Deliver" button 1009. If the prediction result does not meet the expected result of the brand advertiser, the brand advertiser may click the "Back" button 1010. The PC 1000 may request, in response to a click operation (for example, a single-click operation) performed on the "Deliver" button 1009, the server 110 to deliver the electronic advertisement according to the delivery policy. The PC 1000 may display, in response to a click operation (for example, a single-click operation) performed on the "Back" button 1010, the advertisement delivery interface 1004 shown in (a) in FIG. 10B, so that the brand advertiser resets the delivery policy.

The delivered advertisement management area 1001 shown in FIG. 10A may include a plurality of electronic advertisement options, for example, an "electronic advertisement 1" option, an "electronic advertisement 2" option, an "electronic advertisement 3" option, and an "electronic advertisement 4" option. The electronic advertisement option is used to query exposure traffic and an audience of an electronic advertisement.

For example, as shown in FIG. 10C, the PC 1000 may display a management interface 1011 of an electronic advertisement 1 in response to a click operation (for example, a single-click operation) performed by a brand advertiser on the "electronic advertisement 1" option. The management interface 1011 includes an "exposure traffic and audience query" button 1012 of an advertisement slot (for example, an advertising device) to which the electronic advertisement 1 is delivered, an "exposure traffic and audience query" button 1014 of the electronic advertisement 1, and a "quantitative advertisement effect analysis report" button 1013.

In response to a click operation (for example, a single-click operation) performed by a brand advertiser on the "exposure traffic and audience query" button 1012, the PC 1000 may request the server 110 to query exposure traffic and an audience of the electronic advertisement 1 that are generated when the electronic advertisement 1 is played on the advertisement slot 1 from 8:00 to 10:00 on Monday to Friday; and the PC 1000 may receive and display a query result from the server 110. For example, for a display manner of the query result, refer to a display manner of the prediction result shown in (b) in FIG. 10B. Details are not described herein again in this embodiment of this application.

In response to a click operation (for example, a single-click operation) performed by the brand advertiser on the "exposure traffic and audience query" button 1014 of the electronic advertisement 1, the PC 1000 may request the server 110 to query exposure traffic and an audience of the electronic advertisement 1 that are generated when the electronic advertisement 1 is played on an advertisement slot indicated by a delivery policy; and the PC 1000 may receive and display a query result from the server 110. For example, for a display manner of the query result, refer to a display manner of the prediction result shown in (b) in FIG. 10B. Details are not described herein again in this embodiment of this application.

In response to a click operation (for example, a single-click operation) performed by the brand advertiser on the "quantitative advertisement effect analysis report" button 1013, the PC 1000 may request the server 110 to generate a quantitative advertisement effect analysis report; and the PC 1000 may receive and display the quantitative advertisement effect analysis report from the server 110. The quantitative advertisement effect analysis report may include exposure traffic and audience analysis data of the electronic advertisement 1 that is generated when the electronic advertisement 1 is played on an advertisement slot indicated by a delivery policy.

It should be noted that, in this embodiment of this application, the page or the interface of the advertising platform provided by the server 110 includes but is not limited to the page or the interface shown in FIG. 10A, (a) or (b) in FIG. 10B, or FIG. 10C. A specific form of the page or the interface of the advertising platform provided by the server 110 is not limited in this embodiment of this application.

It may be understood that, to implement the foregoing functions, the mobile terminal 130, the advertising device 120, and the server 110 each include corresponding hardware structures and/or software modules for performing the functions. A person skilled in the art should be easily aware that units, algorithms, and steps in the examples described with reference to the embodiments disclosed in this specification can be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the mobile terminal 130 (for example, a mobile phone), the advertising device 120, and the server 110 each may be divided into functional modules based on the foregoing method examples. For example, functional modules corresponding to the functions may be obtained through division, or two or more functions may be integrated into one processing module. The integrated module may be implemented in a form of hardware, or may be implemented in a form of a software functional module. It should be noted that in embodiments of this application, division into the modules is an example and is merely logical function division, and may be other division in an actual implementation.

FIG. 11 is a possible schematic diagram of a structure of a mobile terminal in the foregoing first application scenario. As shown in FIG. 11, the mobile terminal 1100 may include a nearby module 1101, an awareness module 1102, and an advertisement module 1103.

The nearby module 1101 is configured to support the mobile terminal 1100 in performing S303 and S704 in the foregoing embodiments, to perform repetitive detection on the radio signal obtained through listening, and/or is configured to perform another process of the technology described in this specification. The awareness module 1102 is configured to support the mobile terminal 1100 in performing S304 in the foregoing embodiment, and/or is configured to perform another process of the technology described in this specification. The advertisement module 1103 is configured to support the mobile terminal 1100 in performing S305, S306, S307, S601 to S605, S702, and S703 in the foregoing embodiments, and/or is configured to perform another process of the technology described in this specification.

It should be noted that, as shown in FIG. 11, the nearby module 1101 may also be referred to as a nearby engine (that is, a nearby (nearby) engine), the awareness module 1102 may also be referred to as an awareness engine (that is, an awareness (awareness) engine), and the advertisement module 1103 may also be referred to as an advertisement engine (that is, an ads (advertisement) engine).

It may be understood that the mobile terminal 1100 may implement functions of the nearby engine, the awareness engine, and the advertisement engine in a manner of a combination of software and hardware. For example, the mobile terminal 1100 may create a service process 1, and the service process 1 may invoke a wireless communications module (for example, a Bluetooth module or a Wi-Fi module) to implement a function of the nearby engine. For another example, the mobile terminal 1100 may create a service process 2, and the service process 2 may invoke a positioning module (for example, a GPS positioning module) to implement a function of the awareness engine. For still another example, the mobile terminal 1100 may create a service process 3, and the service process 3 may invoke a processor and a communications module (for example, a wireless communications module or a mobile communications module) to implement a function of the advertisement engine.

Refer to FIG. 12A and FIG. 12B. A working principle of each functional module of the mobile terminal 1100 shown in FIG. 11 is described based on interaction between the mobile terminal, the advertising device 120, and the server 110 in the foregoing embodiment by using an example in which the advertising device 120 is an electronic billboard.

As shown in FIG. 12A, the server may perform S1201 of entering device information of the electronic billboard, and then perform S1202 of sending the device information (including beacon prefix information) of the electronic billboard to the mobile terminal. The server may periodically send the device information of the electronic billboard to the mobile terminal. The advertisement engine of the mobile terminal may receive the device information of the electronic billboard from the server, and then perform S-1 of subscribing to an identification event of the device information of the electronic billboard from the nearby engine, to request the nearby engine to perform repetitive detection on a radio signal obtained through listening. The advertisement engine may further perform S-2 of subscribing to real-time location information of the mobile terminal from the awareness engine, to request the awareness engine to send the collected real-time location information to the advertisement engine.

After S1201, the server may perform S1203 of receiving an advertisement delivery task from a second electronic device (that is, a brand advertiser), and perform S1204 of delivering an electronic advertisement 1 to the electronic billboard. The electronic billboard may perform S1205 of playing the electronic advertisement 1, and perform S1206 of broadcasting a radio signal 1. The nearby engine of the mobile terminal may perform S1207 of listening to a radio signal, for example, may obtain, through listening, the radio signal 1 that is broadcast by the electronic billboard. In addition, in response to the subscription performed by the advertisement engine in S-1, the nearby engine performs S 1208 of performing repetitive detection on the radio signal obtained through listening. If the repetitive detection succeeds (that is, the radio signal 1 is obtained through listening for the first time within preset duration), the nearby engine performs S1209 of sending information (for example, a first identifier of the electronic billboard, orientation and location information of the electronic billboard, and an identifier of the electronic advertisement 1) included in the radio signal 1 to the advertisement engine. The awareness engine may perform S 1210 of collecting the real-time location information of the mobile terminal, where the real-time location information is used to determine a location and a movement direction of the mobile terminal. In response to the subscription performed by the advertisement engine in S-2, the awareness engine may perform S1211 of sending the collected real-time location information to the advertisement engine.

The advertisement engine may perform S1212 of determining effective exposure based on the radio signal 1 (for example, the information included in the radio signal 1) and the real-time location information. If the advertisement engine determines that the electronic advertisement 1 generates effective exposure to a user holding the mobile terminal, the advertisement engine may perform S1213 of reporting an effective exposure event to the server, where the effective exposure event carries exposure data (for example, the first identifier of the electronic billboard, first exposure duration, the identifier of the electronic advertisement 1, and an OAID of the mobile terminal). The server may perform S1214 of optimizing an advertisement delivery service of an advertising platform based on the effective exposure event reported by the mobile terminal, and perform S 1215 of interacting with the second electronic device to provide the advertisement delivery service for the brand advertiser.

It should be noted that for a specific implementation process of S1201 to S1215, refer to detailed descriptions in the foregoing embodiment. Details are not described in this embodiment of this application again.

FIG. 13 is a possible schematic diagram of a structure of a mobile terminal in the second application scenario. As shown in FIG. 13, the mobile terminal 1300 may include an awareness module 1301 and an advertisement module 1302.

The awareness module 1301 is configured to support the mobile terminal 1300 in performing S901 in the foregoing embodiment, and/or is configured to perform another process of the technology described in this specification. The advertisement module 1302 is configured to support the mobile terminal 1300 in performing S902, S903, S904, S1002, and S1003 in the foregoing embodiments, and/or is configured to perform another process of the technology described in this specification.

It should be noted that, as shown in FIG. 13, the awareness module 1301 may also be referred to as an awareness engine (that is, an awareness (awareness) engine), and the advertisement module 1302 may also be referred to as an advertisement engine (that is, an ads (advertisement) engine).

It may be understood that the mobile terminal 1300 may implement functions of the nearby engine, the awareness engine, and the advertisement engine in a manner of a combination of software and hardware. For example, the mobile terminal 1300 may create a service process a, and the service process a may invoke a positioning module (for example, a GPS positioning module) to implement a function of the awareness engine. For another example, the mobile terminal 1300 may create a service process b, and the service process b may invoke a processor and a communications module (for example, a wireless communications module or a mobile communications module) to implement a function of the advertisement engine.

Refer to FIG. 14. A working principle of each functional module of the mobile terminal 1300 shown in FIG. 13 is described based on interaction between the mobile terminal, the advertising device 120, and the server 110 in the foregoing embodiment by using an example in which the advertising device 120 is an electronic billboard.

As shown in FIG. 14, the server may perform S1401 of entering device information of the electronic billboard, and then perform S1402 of sending the device information of the electronic billboard (including an identifier such as a first identifier, and orientation and location information of the electronic billboard) to the mobile terminal. The server may periodically send the device information of the electronic billboard to the mobile terminal. The advertisement engine of the mobile terminal may receive the device information of the electronic billboard from the server, and then perform S-a of subscribing to real-time location information of the mobile terminal from the awareness engine, to request the awareness engine to send the collected real-time location information to the advertisement engine.

After S1401, the server may perform S1403 of receiving an advertisement delivery task from a second electronic device (that is, a brand advertiser), and perform S1404 of delivering an electronic advertisement 1 to the electronic billboard. The electronic billboard may perform S1405 of playing the electronic advertisement 1. The awareness engine of the mobile terminal may perform S1406 of collecting the real-time location information of the mobile terminal, where the real-time location information is used to determine a location and a movement direction of the mobile terminal. In response to the subscription performed by the advertisement engine in S-a, the awareness engine may perform S1407 of sending the collected real-time location information to the advertisement engine.

The advertisement engine may perform S1408 of determining effective exposure based on the real-time location information and the orientation and location information of the electronic billboard. If the advertisement engine determines that the electronic advertisement 1 generates effective exposure to a user holding the mobile terminal, the advertisement engine may perform S1409 of reporting an effective exposure event to the server, where the effective exposure event carries exposure data (for example, the first identifier of the electronic billboard, first exposure duration, the identifier of the electronic advertisement 1, and an OAID of the mobile terminal). The server may perform S 1410 of optimizing an advertisement delivery service of an advertising platform based on the effective exposure event reported by the mobile terminal, and perform S1411 of interacting with the second electronic device to provide the advertisement delivery service for the brand advertiser.

It should be noted that for a specific implementation process of S1401 to S1411, refer to detailed descriptions in the foregoing embodiment. Details are not described in this embodiment of this application again.

Another embodiment of this application provides a mobile terminal (the mobile terminal 130 shown in FIG. 2A). The mobile terminal may include one or more processors, a memory, a wireless communications module, and a mobile communications module. The memory, the wireless communications module, and the mobile communications module are coupled to the processor. The memory is configured to store computer program code, where the computer program code includes computer instructions. When the processor executes the computer instructions, the mobile terminal may perform the functions or the steps performed by the mobile terminal 130 in the foregoing method embodiment. For a structure of the mobile terminal, refer to the structure of the mobile terminal 130 shown in FIG. 2A.

Another embodiment of this application provides an advertising device (the advertising device 120 shown in FIG. 2B). The advertising device may include one or more processors, a memory, a display, and a wireless communications module. The memory, the display, and the wireless communications module are coupled to the processor. The memory is configured to store computer program code, where the computer program code includes computer instructions. When the processor executes the computer instructions, the advertising device may perform the functions or the steps performed by the advertising device 120 in the foregoing method embodiment. For a structure of the advertising device, refer to the structure of the advertising device 120 shown in FIG. 2B.

Another embodiment of this application provides a server. As shown in FIG. 15, the server 1500 may include one or more processors 1501, a memory 1502, and a communications module 1503. The memory 1502 and the communications module 1503 are coupled to the processor 1501. The memory 1502 is configured to store computer program code, where the computer program code includes computer instructions. The processor 1501 is configured to run the computer instructions, so that the server 1500 performs the functions or the steps performed by the server 110 in the foregoing method embodiment.

Another embodiment of this application provides a chip system. As shown in FIG. 16, the chip system 1600 includes at least one processor 1601 and at least one interface circuit 1602. The processor 1601 and the interface circuit 1602 may be interconnected through a line. For example, the interface circuit 1602 may be configured to receive a signal from another apparatus (for example, a memory in a mobile terminal, a memory in an advertising device, or a memory in a server). For another example, the interface circuit 1602 may be configured to send a signal to another apparatus (for example, the processor 1601).

For example, the chip system may be applied to the foregoing mobile terminal. The interface circuit 1602 may read instructions stored in the memory in the mobile terminal, and send the instructions to the processor 1601. When the instructions are executed by the processor 1601, the mobile terminal (the mobile terminal 130 shown in FIG. 2A) is enabled to perform the steps in the foregoing embodiment.

For another example, the chip system may be applied to the foregoing advertising device. The interface circuit 1602 may read instructions stored in the memory in the advertising device, and send the instructions to the processor 1601. When the instructions are executed by the processor 1601, the advertising device (the advertising device 120 shown in FIG. 2B) is enabled to perform the steps in the foregoing embodiment.

For another example, the chip system may be applied to the foregoing server. The interface circuit 1602 may read instructions stored in the memory in the server, and send the instructions to the processor 1601. When the instructions are executed by the processor 1601, the server (for example, the server 110) is enabled to perform the steps in the foregoing embodiment.

Certainly, the chip system may further include another discrete component. This is not specifically limited in this embodiment of this application.

An embodiment of this application further provides a computer-readable storage medium. The computer-readable storage medium includes computer instructions. When the computer instructions are run on a mobile terminal (for example, the mobile terminal 130), the mobile terminal is enabled to perform the functions or the steps performed by the mobile terminal 130 in the foregoing method embodiment.

An embodiment of this application further provides a computer program product. When the computer program product runs on a computer, the computer is enabled to perform the functions or the steps performed by the mobile terminal 130 in the foregoing method embodiment.

An embodiment of this application further provides a computer-readable storage medium. The computer-readable storage medium includes computer instructions. When the computer instructions are run on an advertising device (for example, the advertising device 120), the advertising device is enabled to perform the functions or the steps performed by the advertising device 120 in the foregoing method embodiment.

An embodiment of this application further provides a computer program product. When the computer program product runs on a computer, the computer is enabled to perform the functions or the steps performed by the advertising device 120 in the foregoing method embodiment.

An embodiment of this application further provides a computer-readable storage medium. The computer-readable storage medium includes computer instructions. When the computer instructions are run on a server (for example, the server 110), the server is enabled to perform the functions or the steps performed by the server 110 in the foregoing method embodiment.

An embodiment of this application further provides a computer program product. When the computer program product runs on a computer, the computer is enabled to perform the functions or the steps performed by the server 110 in the foregoing method embodiment.

Based on the foregoing descriptions of the implementations, a person skilled in the art may clearly understand that for the purpose of convenient and brief descriptions, division into the foregoing functional modules is merely used as an example for description. In actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division in an actual implementation. For example, a plurality of units or components may be combined or may be integrated into another apparatus, or some features may be ignored or not be performed. In addition, the displayed or discussed mutual coupling or direct coupling or communication connection may be implemented through some interfaces. The indirect coupling or communication connection between the apparatuses or units may be implemented in electrical, mechanical, or another form.

The units described as separate components may or may not be physically separate, and components displayed as units may be one or more physical units, that is, may be located in one place, or may be distributed on a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A method for collecting statistics about exposure data, wherein the method comprises:
collecting, by a mobile terminal (130), real-time location information of the mobile terminal (130), wherein the real-time location information is used to determine a location and a movement direction of the mobile terminal (130);
obtaining, by the mobile terminal (130), a first identifier and orientation and location information of an advertising device (120), wherein the orientation and location information is used to indicate a location and an orientation of the advertising device (120);
collecting, by the mobile terminal (130), statistics about first exposure duration of the advertising device (120) for the mobile terminal (130), wherein the first exposure duration is duration in which an orientation and a location of the mobile terminal (130) relative to the advertising device (120) meet a preset condition, and that the orientation and the location of the mobile terminal relative to the advertising device (120) meet the preset condition comprises: a distance between the mobile terminal (130) and the advertising device (120) is within a preset distance range, the mobile terminal (130) is located on one side of the orientation of the advertising device (120), and an included angle between the movement direction of the mobile terminal (130) and the orientation of the advertising device (120) is within a preset included angle range;
sending, by the mobile terminal (130), exposure data of the advertising device (120) to a server (110) when the first exposure duration is greater than preset exposure duration, wherein the exposure data comprises the first identifier of the advertising device (120) and an identifier of the mobile terminal (130), and the identifier of the mobile terminal (130) corresponds to a user who uses the mobile terminal (130); and
receiving, by the server (110), the exposure data from a plurality of mobile terminals (130), and collecting statistics about exposure traffic and an audience of the advertising device (120) based on the received exposure data, wherein the exposure traffic is a quantity of users who were able to watch an electronic advertisement played by the advertising device (120), and the audience is a group of people who have watched the electronic advertisement.

2. The method according to claim 1, wherein the exposure data further comprises the first exposure duration; and the method further comprises:
collecting, by the server (110) based on the exposure data comprising the first exposure duration, statistics about duration in which the user watches the electronic advertisement played by the advertising device (120).

3. The method according to claim 1 or 2, wherein the method further comprises:
broadcasting, by the advertising device (120), a radio signal, wherein the radio signal comprises the first identifier and the orientation and location information of the advertising device (120); and
the obtaining, by the mobile terminal (130), a first identifier and orientation and location information of an advertising device (120) comprises:
obtaining, by the mobile terminal (130), the radio signal from the advertising device (120) through listening; and
obtaining, by the mobile terminal (130), the first identifier and the orientation and location information of the advertising device (120) based on the radio signal.

4. The method according to claim 3, wherein the radio signal further comprises an identifier of an electronic advertisement being played by the advertising device (120), and the exposure data further comprises the identifier of the electronic advertisement; and
the method further comprises:
collecting, by the server (110), statistics about exposure traffic and an audience of the electronic advertisement based on the exposure data comprising the identifier of the electronic advertisement.

5. The method according to claim 3 or 4, wherein the method further comprises:
sending, by the server (110), device information of a plurality of to-be-monitored advertising devices (120) to the mobile terminal (130), wherein the device information of the plurality of advertising devices (120) comprises first identifiers of the plurality of advertising devices (120); and
receiving and storing, by the mobile terminal (130), the device information of the plurality of advertising devices (120); and
before the collecting, by the mobile terminal (130), statistics about first exposure duration of the advertising device (120) for the mobile terminal (130), the method further comprises:
determining, by the mobile terminal (130) based on the first identifier in the radio signal and the first identifiers of the plurality of advertising devices (120), that the radio signal is a radio signal that is broadcast by any one of the plurality of advertising devices (120).

6. The method according to claim 3 or 4, wherein the radio signal further comprises a second identifier of the advertising device (120); and the method further comprises:
sending, by the server (110), device information of a plurality of to-be-monitored advertising devices (120) to the mobile terminal (130), wherein the device information of the plurality of advertising devices (120) comprises second identifiers of the plurality of advertising devices (120), the second identifier is a radio network identifier or prefix information of a radio network identifier, and the prefix information is first N characters of the radio network identifier, wherein N ≥ 2, and N is a positive integer; and
receiving and storing, by the mobile terminal (130), the device information of the plurality of advertising devices (120); and
before the collecting, by the mobile terminal (130), statistics about first exposure duration of the advertising device (120) for the mobile terminal (130), the method further comprises:
determining, by the mobile terminal (130) based on the second identifier in the radio signal and the second identifiers of the plurality of advertising devices (120), that the radio signal is a radio signal that is broadcast by any one of the plurality of advertising devices (120).

7. The method according to claim 1 or 2, wherein before the obtaining, by the mobile terminal (130), a first identifier and orientation and location information of an advertising device (120), the method further comprises:
sending, by the server (110), device information of a plurality of to-be-monitored advertising devices (120) to the mobile terminal (130), wherein the device information of the plurality of advertising devices (120) comprises first identifiers and orientation and location information of the plurality of advertising devices (120); and
receiving, by the mobile terminal (130), the device information of the plurality of advertising devices (120) from the server (110), and storing the device information of the plurality of advertising devices (120); and
the obtaining, by the mobile terminal (130), a first identifier and orientation and location information of an advertising device (120) comprises:
obtaining, by the mobile terminal (130) from the device information of the plurality of advertising devices (120) based on the real-time location information, the first identifier and the orientation and location information of the advertising device (120) whose distance from the mobile terminal (130) is within the preset distance range.

8. A method for collecting statistics about exposure data, wherein the method comprises:
collecting, by a mobile terminal (130), real-time location information of the mobile terminal (130), wherein the real-time location information is used to determine a location and a movement direction of the mobile terminal (130);
obtaining, by the mobile terminal (130), a first identifier and orientation and location information of an advertising device (120), wherein the orientation and location information is used to indicate a location and an orientation of the advertising device (120);
collecting, by the mobile terminal (130), statistics about first exposure duration of the advertising device (120) for the mobile terminal (130), wherein the first exposure duration is duration in which an orientation and a location of the mobile terminal (130) relative to the advertising device (120) meet a preset condition, and that the orientation and the location of the mobile terminal (130) relative to the advertising device (120) meet the preset condition comprises: a distance between the mobile terminal (130) and the advertising device (120) is within a preset distance range, the mobile terminal (130) is located on one side of the orientation of the advertising device (120), and an included angle between the movement direction of the mobile terminal (130) and the orientation of the advertising device (120) is within a preset included angle range; and
sending, by the mobile terminal (130), exposure data of the advertising device (120) to a server (110) when the first exposure duration is greater than preset exposure duration, wherein the exposure data comprises the first identifier of the advertising device (120) and an identifier of the mobile terminal (130), and the identifier of the mobile terminal (130) corresponds to a user who uses the mobile terminal (130), wherein
the exposure data is used by the server (110) to collect statistics about exposure traffic and an audience of the advertising device (120), the exposure traffic is a quantity of users who were able to watch an electronic advertisement played by the advertising device (120), and the audience is a group of people who have watched the electronic advertisement.

9. The method according to claim 8, wherein the exposure data further comprises the first exposure duration; and the first exposure duration is used by the server (110) to collect statistics about duration in which the user watches the electronic advertisement played by the advertising device (120).

10. The method according to claim 8 or 9, wherein the obtaining, by the mobile terminal (130), a first identifier and orientation and location information of an advertising device (120) comprises:
obtaining, by the mobile terminal (130), a radio signal from the advertising device (120), wherein the radio signal comprises the first identifier and the orientation and location information of the advertising device (120); and
obtaining, by the mobile terminal (130), the first identifier and the orientation and location information of the advertising device (120) based on the radio signal.

11. The method according to claim 10, wherein the radio signal further comprises an identifier of an electronic advertisement being played by the advertising device (120), and the exposure data further comprises the identifier of the electronic advertisement; and
the exposure data is used by the server (110) to collect statistics about exposure traffic and an audience of the electronic advertisement.

12. The method according to claim 10 or 11, wherein the method further comprises:
receiving, by the mobile terminal (130), device information of a plurality of to-be-monitored advertising devices (120) from the server (110), and storing the device information of the plurality of advertising devices (120), wherein the device information of the plurality of advertising devices (120) comprises first identifiers of the plurality of advertising devices (120); and
before the collecting, by the mobile terminal (130), statistics about first exposure duration of the advertising device (120) for the mobile terminal (130), the method further comprises:
determining, by the mobile terminal (130) based on the first identifier in the radio signal and the first identifiers of the plurality of advertising devices (120), that the radio signal is a radio signal that is broadcast by any one of the plurality of advertising devices (120).

13. The method according to claim 10 or 11, wherein the radio signal further comprises a second identifier of the advertising device (120); and the method further comprises:
receiving, by the mobile terminal (130), device information of a plurality of to-be-monitored advertising devices (120) from the server (110), and storing the device information of the plurality of advertising devices (120), wherein the device information of the plurality of advertising devices (120) comprises second identifiers of the plurality of advertising devices (120), the second identifier is a radio network identifier or prefix information of a radio network identifier, and the prefix information is first N characters of the radio network identifier, wherein N ≥ 2, and N is a positive integer; and
before the collecting, by the mobile terminal (130), statistics about first exposure duration of the advertising device (120) for the mobile terminal (130), the method further comprises:
determining, by the mobile terminal (130) based on the second identifier in the radio signal and the second identifiers of the plurality of advertising devices (120), that the radio signal is a radio signal that is broadcast by any one of the plurality of advertising devices (120).

14. An advertising system, wherein the system comprises an advertising device (120), a mobile terminal (130), and a server (110), wherein
the mobile terminal (130) is configured to: collect real-time location information of the mobile terminal (130), wherein the real-time location information is used to determine a location and a movement direction of the mobile terminal (130); obtain a first identifier and orientation and location information of the advertising device (120), wherein the orientation and location information is used to indicate a location and an orientation of the advertising device (120); collect statistics about first exposure duration of the advertising device (120) for the mobile terminal (130); and send exposure data of the advertising device (120) to the server (110) when the first exposure duration is greater than preset exposure duration, wherein the exposure data comprises the first identifier of the advertising device (120) and an identifier of the mobile terminal (130), and the identifier of the mobile terminal (130) corresponds to a user who uses the mobile terminal (130); and the first exposure duration is duration in which an orientation and a location of the mobile terminal (130) relative to the advertising device (120) meet a preset condition, and that the orientation and the location of the mobile terminal (130) relative to the advertising device (120) meet the preset condition comprises: a distance between the mobile terminal (130) and the advertising device (120) is within a preset distance range, the mobile terminal (130) is located on one side of the orientation of the advertising device (120), and an included angle between the movement direction of the mobile terminal (130) and the orientation of the advertising device (120) is within a preset included angle range; and
the server (110) is configured to: receive the exposure data from a plurality of mobile terminals (130), and collect statistics about exposure traffic and an audience of the advertising device (120) based on the received exposure data, wherein the exposure traffic is a quantity of users who were able to watch an electronic advertisement played by the advertising device (120), and the audience is a group of people who have watched the electronic advertisement.

15. The system according to claim 14, wherein the advertising device (120) is configured to broadcast a radio signal, wherein the radio signal comprises the first identifier and the orientation and location information of the advertising device (120); and
the mobile terminal (130) is further configured to: obtain the radio signal from the advertising device (120) through listening, and obtain the first identifier and the orientation and location information of the advertising device (120) based on the radio signal.

## Patentansprüche

1. Verfahren zum Erfassen von Statistiken über Expositionsdaten, wobei das Verfahren Folgendes umfasst:
Erfassen, durch ein mobiles Endgerät (130), von Echtzeit-Standortinformationen des mobilen Endgeräts (130), wobei die Echtzeit-Standortinformationen verwendet werden, um einen Standort und eine Bewegungsrichtung des mobilen Endgeräts (130) zu bestimmen;
Erlangen, durch das mobile Endgerät (130), einer ersten Kennung sowie von Ausrichtungs- und Standortinformationen einer Werbevorrichtung (120), wobei die Ausrichtungs- und Standortinformationen verwendet werden, um einen Standort und eine Ausrichtung der Werbevorrichtung (120) anzuzeigen;
Erfassen, durch das mobile Endgerät (130), von Statistiken über eine erste Expositionsdauer der Werbevorrichtung (120) für das mobile Endgerät (130), wobei die erste Expositionsdauer eine Dauer ist, in der eine Ausrichtung und ein Standort des mobilen Endgeräts (130) relativ zu der Werbevorrichtung (120) eine voreingestellte Bedingung erfüllen, und Erfüllen der voreingestellten Bedingung durch die Ausrichtung und den Standort des mobilen Endgeräts relativ zu der Werbevorrichtung (120) Folgendes umfasst: eine Entfernung zwischen dem mobilen Endgerät (130) und der Werbevorrichtung (120) liegt innerhalb eines voreingestellten Entfernungsbereichs, das mobile Endgerät (130) befindet sich auf einer Seite der Ausrichtung der Werbevorrichtung (120) und ein eingeschlossener Winkel zwischen der Bewegungsrichtung des mobilen Endgeräts (130) und der Ausrichtung der Werbevorrichtung (120) liegt innerhalb eines voreingestellten eingeschlossenen Winkelbereichs;
Senden, durch das mobile Endgerät (130), von Expositionsdaten der Werbevorrichtung (120) an einen Server (110), wenn die erste Expositionsdauer größer als die voreingestellte Expositionsdauer ist, wobei die Expositionsdaten die erste Kennung der Werbevorrichtung (120) und eine Kennung des mobilen Endgeräts (130) umfassen und die Kennung des mobilen Endgeräts (130) einem Benutzer, der das mobile Endgerät (130) verwendet, entspricht; und
Empfangen, durch den Server (110), der Expositionsdaten von einer Vielzahl mobiler Endgeräte (130) und Erfassen von Statistiken über Expositionsverkehr und eine Zielgruppe der Werbevorrichtung (120) basierend auf den empfangenen Expositionsdaten, wobei der Expositionsverkehr eine Anzahl von Benutzern ist, die eine elektronische Werbung, die von der Werbevorrichtung (120) abgespielt wurde, ansehen konnten, und die Zielgruppe eine Gruppe von Personen, welche die elektronische Werbung angesehen haben, ist.

2. Verfahren nach Anspruch 1, wobei die Expositionsdaten ferner die erste Expositionsdauer umfassen; und das Verfahren ferner Folgendes umfasst:
Erfassen, durch den Server (110), basierend auf den Expositionsdaten, umfassend die erste Expositionsdauer, von Statistiken über die Dauer, in welcher der Benutzer die elektronische Werbung, die von der Werbevorrichtung (120) abgespielt wird, ansieht.

3. Verfahren nach Anspruch 1 oder 2, wobei das Verfahren ferner Folgendes umfasst:
Übertragen, durch die Werbevorrichtung (120), eines Funksignals, wobei das Funksignal die erste Kennung und die Ausrichtungs- und Standortinformationen der Werbevorrichtung (120) umfasst; und
das Erlangen, durch das mobile Endgerät (130), einer ersten Kennung und von Ausrichtungs- und Standortinformationen einer Werbevorrichtung (120) Folgendes umfasst:
Erlangen, durch das mobile Endgerät (130), des Funksignals von der Werbevorrichtung (120) durch Abhören; und
Erlangen, durch das mobile Endgerät (130), der ersten Kennung und der Ausrichtungs- und Standortinformationen der Werbevorrichtung (120) basierend auf dem Funksignal.

4. Verfahren nach Anspruch 3, wobei das Funksignal ferner eine Kennung einer elektronischen Werbung, die von der Werbevorrichtung (120) abgespielt wird, umfasst und die Expositionsdaten ferner die Kennung der elektronischen Werbung umfassen; und
das Verfahren ferner Folgendes umfasst:
Erfassen, durch den Server (110), von Statistiken über Expositionsverkehr und eine Zielgruppe der elektronischen Werbung basierend auf den Expositionsdaten, umfassend die Kennung der elektronischen Werbung.

5. Verfahren nach Anspruch 3 oder 4, wobei das Verfahren ferner Folgendes umfasst:
Senden, durch den Server (110), von Vorrichtungsinformationen einer Vielzahl von zu überwachenden Werbevorrichtungen (120) an das mobile Endgerät (130), wobei die Vorrichtungsinformationen der Vielzahl von Werbevorrichtungen (120) erste Kennungen der Vielzahl von Werbevorrichtungen (120) umfassen; und
Empfangen und Speichern, durch das mobile Endgerät (130), der Vorrichtungsinformationen der Vielzahl von Werbevorrichtungen (120); und
das Verfahren vor dem Erfassen, durch das mobile Endgerät (130), von Statistiken über die erste Expositionsdauer der Werbevorrichtung (120) für das mobile Endgerät (130), ferner Folgendes umfasst:
Bestimmen, durch das mobile Endgerät (130), basierend auf der ersten Kennung in dem Funksignal und den ersten Kennungen der Vielzahl von Werbevorrichtungen (120), dass es sich bei dem Funksignal um ein Funksignal, das von einer beliebigen der Vielzahl von Werbevorrichtungen (120) übertragen wird, handelt.

6. Verfahren nach Anspruch 3 oder 4, wobei das Funksignal ferner eine zweite Kennung der Werbevorrichtung (120) umfasst; und das Verfahren ferner Folgendes umfasst:
Senden, durch den Server (110), von Vorrichtungsinformationen einer Vielzahl von zu überwachenden Werbevorrichtungen (120) an das mobile Endgerät (130), wobei die Vorrichtungsinformationen der Vielzahl von Werbevorrichtungen (120) zweite Kennungen der Vielzahl von Werbevorrichtungen (120) umfassen, die zweite Kennung eine Funknetzwerkkennung oder Präfixinformationen einer Funknetzwerkkennung sind und es sich bei den Präfixinformationen um erste N Zeichen der Funknetzwerkkennung handelt, wobei N ≥ 2 und N eine positive ganze Zahl ist; und
Empfangen und Speichern, durch das mobile Endgerät (130), der Vorrichtungsinformationen der Vielzahl von Werbevorrichtungen (120); und
das Verfahren vor dem Erfassen, durch das mobile Endgerät (130), von Statistiken über die erste Expositionsdauer der Werbevorrichtung (120) für das mobile Endgerät (130), ferner Folgendes umfasst:
Bestimmen, durch das mobile Endgerät (130), basierend auf der zweiten Kennung in dem Funksignal und den zweiten Kennungen der Vielzahl von Werbevorrichtungen (120), dass es sich bei dem Funksignal um ein Funksignal, das von einer beliebigen der Vielzahl von Werbevorrichtungen (120) übertragen wird, handelt.

7. Verfahren nach Anspruch 1 oder 2, wobei das Verfahren vor dem Erlangen, durch das mobile Endgerät (130), einer ersten Kennung und von Ausrichtungs- und Standortinformationen einer Werbevorrichtung (120) ferner Folgendes umfasst:
Senden, durch den Server (110), von Vorrichtungsinformationen einer Vielzahl von zu überwachenden Werbevorrichtungen (120) an das mobile Endgerät (130), wobei die Vorrichtungsinformationen der Vielzahl von Werbevorrichtungen (120) erste Kennungen und Ausrichtungs- und Standortinformationen der Vielzahl von Werbevorrichtungen (120) umfassen; und
Empfangen, durch das mobile Endgerät (130), der Vorrichtungsinformationen der Vielzahl von Werbevorrichtungen (120) von dem Server (110) und Speichern der Vorrichtungsinformationen der Vielzahl von Werbevorrichtungen (120); und
das Erlangen, durch das mobile Endgerät (130), einer ersten Kennung und von Ausrichtungs- und Standortinformationen einer Werbevorrichtung (120) Folgendes umfasst:
Erlangen, durch das mobile Endgerät (130), der ersten Kennung und der Ausrichtungs- und Standortinformationen der Werbevorrichtung (120), deren Entfernung von dem mobilen Endgerät (130) innerhalb des voreingestellten Entfernungsbereichs liegt, aus den Vorrichtungsinformationen der Vielzahl von Werbevorrichtungen (120) basierend auf den Echtzeit-Standortinformationen.

8. Verfahren zum Erfassen von Statistiken über Expositionsdaten, wobei das Verfahren Folgendes umfasst:
Erfassen, durch ein mobiles Endgerät (130), von Echtzeit-Standortinformationen des mobilen Endgeräts (130), wobei die Echtzeit-Standortinformationen verwendet werden, um einen Standort und eine Bewegungsrichtung des mobilen Endgeräts (130) zu bestimmen;
Erlangen, durch das mobile Endgerät (130), einer ersten Kennung sowie von Ausrichtungs- und Standortinformationen einer Werbevorrichtung (120), wobei die Ausrichtungs- und Standortinformationen verwendet werden, um einen Standort und eine Ausrichtung der Werbevorrichtung (120) anzuzeigen;
Erfassen, durch das mobile Endgerät (130), von Statistiken über eine erste Expositionsdauer der Werbevorrichtung (120) für das mobile Endgerät (130), wobei die erste Expositionsdauer eine Dauer ist, in der eine Ausrichtung und ein Standort des mobilen Endgeräts (130) relativ zu der Werbevorrichtung (120) eine voreingestellte Bedingung erfüllen, und Erfüllen der voreingestellten Bedingung durch die Ausrichtung und den Standort des mobilen Endgeräts (130) relativ zu der Werbevorrichtung (120) Folgendes umfasst: eine Entfernung zwischen dem mobilen Endgerät (130) und der Werbevorrichtung (120) liegt innerhalb eines voreingestellten Entfernungsbereichs, das mobile Endgerät (130) befindet sich auf einer Seite der Ausrichtung der Werbevorrichtung (120) und ein eingeschlossener Winkel zwischen der Bewegungsrichtung des mobilen Endgeräts (130) und der Ausrichtung der Werbevorrichtung (120) liegt innerhalb eines voreingestellten eingeschlossenen Winkelbereichs; und
Senden, durch das mobile Endgerät (130), von Expositionsdaten der Werbevorrichtung (120) an einen Server (110), wenn die erste Expositionsdauer größer als die voreingestellte Expositionsdauer ist, wobei die Expositionsdaten die erste Kennung der Werbevorrichtung (120) und eine Kennung des mobilen Endgeräts (130) umfassen und die Kennung des mobilen Endgeräts (130) einem Benutzer, der das mobile Endgerät (130) verwendet, entspricht; wobei
die Expositionsdaten von dem Server (110) verwendet werden, um Statistiken über Expositionsverkehr und eine Zielgruppe der Werbevorrichtung (120) zu erfassen, wobei der Expositionsverkehr eine Anzahl von Benutzern ist, die eine elektronische Werbung, die von der Werbevorrichtung (120) abgespielt wurde, ansehen konnten, und die Zielgruppe eine Gruppe von Personen, welche die elektronische Werbung angesehen haben, ist.

9. Verfahren nach Anspruch 8, wobei die Expositionsdaten ferner die erste Expositionsdauer umfassen; und
die erste Expositionsdauer von dem Server (110) verwendet wird, um Statistiken über eine Dauer zu erfassen, in welcher der Benutzer die elektronische Werbung, die von der Werbevorrichtung (120) abgespielt wird, ansieht.

10. Verfahren nach Anspruch 8 oder 9, wobei das Erlangen, durch das mobile Endgerät (130), einer ersten Kennung und von Ausrichtungs- und Standortinformationen einer Werbevorrichtung (120) Folgendes umfasst:
Erlangen, durch das mobile Endgerät (130), eines Funksignals von der Werbevorrichtung (120), wobei das Funksignal die erste Kennung und die Ausrichtungs- und Standortinformationen der Werbevorrichtung (120) umfasst; und
Erlangen, durch das mobile Endgerät (130), der ersten Kennung und der Ausrichtungs- und Standortinformationen der Werbevorrichtung (120) basierend auf dem Funksignal.

11. Verfahren nach Anspruch 10, wobei das Funksignal ferner eine Kennung einer elektronischen Werbung, die von der Werbevorrichtung (120) abgespielt wird, umfasst und die Expositionsdaten ferner die Kennung der elektronischen Werbung umfassen; und
die Expositionsdaten von dem Server (110) verwendet werden, um Statistiken über Expositionsverkehr und eine Zielgruppe der elektronischen Werbung zu erfassen.

12. Verfahren nach Anspruch 10 oder 11, wobei das Verfahren ferner Folgendes umfasst:
Empfangen, durch das mobile Endgerät (130), von Vorrichtungsinformationen einer Vielzahl von zu überwachenden Werbevorrichtungen (120) von dem Server (110) und Speichern der Vorrichtungsinformationen der Vielzahl von Werbevorrichtungen (120), wobei die Vorrichtungsinformationen der Vielzahl von Werbevorrichtungen (120) erste Kennungen der Vielzahl von Werbevorrichtungen (120) umfassen; und
das Verfahren vor dem Erfassen, durch das mobile Endgerät (130), von Statistiken über die erste Expositionsdauer der Werbevorrichtung (120) für das mobile Endgerät (130), ferner Folgendes umfasst:
Bestimmen, durch das mobile Endgerät (130), basierend auf der ersten Kennung in dem Funksignal und den ersten Kennungen der Vielzahl von Werbevorrichtungen (120), dass es sich bei dem Funksignal um ein Funksignal, das von einer beliebigen der Vielzahl von Werbevorrichtungen (120) übertragen wird, handelt.

13. Verfahren nach Anspruch 10 oder 11, wobei das Funksignal ferner eine zweite Kennung der Werbevorrichtung (120) umfasst; und das Verfahren ferner Folgendes umfasst:
Empfangen, durch das mobile Endgerät (130), von Vorrichtungsinformationen einer Vielzahl von zu überwachenden Werbevorrichtungen (120) von dem Server (110) und Speichern der Vorrichtungsinformationen der Vielzahl von Werbevorrichtungen (120), wobei die Vorrichtungsinformationen der Vielzahl von Werbevorrichtungen (120) zweite Kennungen der Vielzahl von Werbevorrichtungen (120) umfassen, die zweite Kennung eine Funknetzwerkkennung oder Präfixinformationen einer Funknetzwerkkennung sind und es sich bei den Präfixinformationen um erste N Zeichen der Funknetzwerkkennung handelt, wobei N ≥ 2 und N eine positive ganze Zahl ist; und
das Verfahren vor dem Erfassen, durch das mobile Endgerät (130), von Statistiken über die erste Expositionsdauer der Werbevorrichtung (120) für das mobile Endgerät (130), ferner Folgendes umfasst:
Bestimmen, durch das mobile Endgerät (130), basierend auf der zweiten Kennung in dem Funksignal und den zweiten Kennungen der Vielzahl von Werbevorrichtungen (120), dass es sich bei dem Funksignal um ein Funksignal, das von einer beliebigen der Vielzahl von Werbevorrichtungen (120) übertragen wird, handelt.

14. Werbesystem, wobei das System eine Werbevorrichtung (120), ein mobiles Endgerät (130) und einen Server (110) umfasst, wobei
das mobile Endgerät (130) zu Folgendem konfiguriert ist:
Erfassen von Echtzeit-Standortinformationen des mobilen Endgeräts (130), wobei die Echtzeit-Standortinformationen verwendet werden, um einen Standort und eine Bewegungsrichtung des mobilen Endgeräts (130) zu bestimmen; Erlangen einer ersten Kennung und von Ausrichtungs- und Standortinformationen der Werbevorrichtung (120), wobei die Ausrichtungs- und Standortinformationen verwendet werden, um einen Standort und eine Ausrichtung der Werbevorrichtung (120) anzuzeigen; Erfassen von Statistiken über die erste Expositionsdauer der Werbevorrichtung (120) für das mobile Endgerät (130); und
Senden von Expositionsdaten der Werbevorrichtung (120) an den Server (110), wenn die erste Expositionsdauer größer als eine voreingestellte Expositionsdauer ist, wobei die Expositionsdaten die erste Kennung der Werbevorrichtung (120) und eine Kennung des mobilen Endgeräts (130) umfassen und die Kennung des mobilen Endgeräts (130) einem Benutzer, der das mobile Endgerät (130) verwendet, entspricht; und die erste Expositionsdauer eine Dauer ist, in der eine Ausrichtung und ein Standort des mobilen Endgeräts (130) relativ zu der Werbevorrichtung (120) eine voreingestellte Bedingung erfüllen und Erfüllen der voreingestellten Bedingung durch die Ausrichtung und den Standort des mobilen Endgeräts (130) relativ zu der Werbevorrichtung (120) Folgendes umfasst: eine Entfernung zwischen dem mobilen Endgerät (130) und der Werbevorrichtung (120) liegt innerhalb eines voreingestellten Entfernungsbereichs, das mobile Endgerät (130) befindet sich auf einer Seite der Ausrichtung der Werbevorrichtung (120) und ein eingeschlossener Winkel zwischen der Bewegungsrichtung des mobilen Endgeräts (130) und der Ausrichtung der Werbevorrichtung (120) liegt innerhalb eines voreingestellten eingeschlossenen Winkelbereichs; und
der Server (110) zu Folgendem konfiguriert ist: Empfangen der Expositionsdaten von einer Vielzahl mobiler Endgeräte (130) und Erfassen von Statistiken über Expositionsverkehr und eine Zielgruppe der Werbevorrichtung (120) basierend auf den empfangenen Expositionsdaten, wobei der Expositionsverkehr eine Anzahl von Benutzern ist, die eine elektronische Werbung, die von der Werbevorrichtung (120) abgespielt wurde, ansehen konnten, und die Zielgruppe eine Gruppe von Personen, welche die elektronische Werbung angesehen haben, ist.

15. System nach Anspruch 14, wobei die Werbevorrichtung (120) dazu konfiguriert ist, ein Funksignal zu übertragen, wobei das Funksignal die erste Kennung und die Ausrichtungs- und Standortinformationen der Werbevorrichtung (120) umfasst; und das mobile Endgerät (130) ferner zu Folgendem konfiguriert ist: Erlangen des Funksignals von der Werbevorrichtung (120) durch Abhören und Erlangen der ersten Kennung und der Ausrichtungs- und Standortinformationen der Werbevorrichtung (120) basierend auf dem Funksignal.

## Revendications

1. Procédé de collecte de statistiques concernant des données d'exposition, dans lequel le procédé comprend :
la collecte, par un terminal mobile (130), d'informations d'emplacement en temps réel du terminal mobile (130), dans lequel les informations d'emplacement en temps réel sont utilisées pour déterminer un emplacement et une direction de mouvement du terminal mobile (130) ;
l'obtention, par le terminal mobile (130), d'un premier identifiant et d'informations d'orientation et d'emplacement d'un dispositif publicitaire (120), dans lequel les informations d'orientation et d'emplacement sont utilisées pour indiquer un emplacement et une orientation du dispositif publicitaire (120) ;
la collecte, par le terminal mobile (130), de statistiques concernant une première durée d'exposition du dispositif publicitaire (120) pour le terminal mobile (130), dans lequel la première durée d'exposition est une durée pendant laquelle une orientation et un emplacement du terminal mobile (130) par rapport au dispositif publicitaire (120) satisfont à une condition prédéfinie, et que l'orientation et l'emplacement du terminal mobile par rapport au dispositif publicitaire (120) satisfont à la condition prédéfinie comprennent : une distance entre le terminal mobile (130) et le dispositif publicitaire (120) se trouve dans une plage de distance prédéfinie, le terminal mobile (130) est situé d'un côté de l'orientation du dispositif publicitaire (120), et un angle inclus entre la direction de mouvement du terminal mobile (130) et l'orientation du dispositif publicitaire (120) se situe dans une plage d'angle inclus prédéfinie ;
l'envoi, par le terminal mobile (130), de données d'exposition du dispositif publicitaire (120) à un serveur (110) lorsque la première durée d'exposition est supérieure à une durée d'exposition prédéfinie, dans lequel les données d'exposition comprennent le premier identifiant du dispositif publicitaire (120) et un identifiant du terminal mobile (130), et l'identifiant du terminal mobile (130) correspond à un utilisateur qui utilise le terminal mobile (130) ; et
la réception, par le serveur (110), des données d'exposition à partir d'une pluralité de terminaux mobiles (130), et la collecte de statistiques concernant un trafic d'exposition et une audience du dispositif publicitaire (120) sur la base des données d'exposition reçues, dans lequel le trafic d'exposition est une quantité d'utilisateurs qui ont été en mesure de regarder une publicité électronique diffusée par le dispositif publicitaire (120), et l'audience est un groupe de personnes qui ont regardé la publicité électronique.

2. Procédé selon la revendication 1, dans lequel les données d'exposition comprennent également la première durée d'exposition ; et le procédé comprend également :
la collecte, par le serveur (110), sur la base des données d'exposition comprenant la première durée d'exposition, de statistiques concernant une durée pendant laquelle l'utilisateur regarde la publicité électronique diffusée par le dispositif publicitaire (120).

3. Procédé selon la revendication 1 ou 2, dans lequel le procédé comprend également :
la diffusion, par le dispositif publicitaire (120), d'un signal radio, dans lequel le signal radio comprend le premier identifiant et les informations d'orientation et d'emplacement du dispositif publicitaire (120) ; et
l'obtention, par le terminal mobile (130), d'un premier identifiant et d'informations d'orientation et d'emplacement d'un dispositif publicitaire (120) comprend :
l'obtention, par le terminal mobile (130), du signal radio à partir du dispositif publicitaire (120) par écoute ; et
l'obtention, par le terminal mobile (130), du premier identifiant et des informations d'orientation et d'emplacement du dispositif publicitaire (120) sur la base du signal radio.

4. Procédé selon la revendication 3, dans lequel le signal radio comprend également un identifiant d'une publicité électronique étant diffusée par le dispositif publicitaire (120), et les données d'exposition comprennent également l'identifiant de la publicité électronique ; et
le procédé comprend également :
la collecte, par le serveur (110), de statistiques concernant un trafic d'exposition et une audience de la publicité électronique sur la base des données d'exposition comprenant l'identifiant de la publicité électronique.

5. Procédé selon la revendication 3 ou 4, dans lequel le procédé comprend également :
l'envoi, par le serveur (110), d'informations de dispositif d'une pluralité de dispositifs publicitaires à surveiller (120) au terminal mobile (130), dans lequel les informations de dispositif de la pluralité de dispositifs publicitaires (120) comprennent des premiers identifiants de la pluralité de dispositifs publicitaires (120) ; et
la réception et le stockage, par le terminal mobile (130), des informations de dispositif de la pluralité de dispositifs publicitaires (120) ; et
avant la collecte, par le terminal mobile (130), de statistiques concernant une première durée d'exposition du dispositif publicitaire (120) pour le terminal mobile (130), le procédé comprend également :
la détermination, par le terminal mobile (130) sur la base du premier identifiant dans le signal radio et des premiers identifiants de la pluralité de dispositifs publicitaires (120), que le signal radio est un signal radio qui est diffusé par l'un quelconque de la pluralité de dispositifs publicitaires (120).

6. Procédé selon la revendication 3 ou 4, dans lequel le signal radio comprend également un second identifiant du dispositif publicitaire (120) ; et le procédé comprend également :
l'envoi, par le serveur (110), d'informations de dispositif d'une pluralité de dispositifs publicitaires à surveiller (120) au terminal mobile (130), dans lequel les informations de dispositif de la pluralité de dispositifs publicitaires (120) comprend des seconds identifiants de la pluralité de dispositifs publicitaires (120), le second identifiant est un identifiant de réseau radio ou des informations de préfixe d'un identifiant de réseau radio, et les informations de préfixe sont constituées des N premiers caractères de l'identifiant de réseau radio, dans lequel N ≥ 2, et N est un entier positif ; et
la réception et le stockage, par le terminal mobile (130), des informations de dispositif de la pluralité de dispositifs publicitaires (120) ; et
avant la collecte, par le terminal mobile (130), de statistiques concernant une première durée d'exposition du dispositif publicitaire (120) pour le terminal mobile (130), le procédé comprend également :
la détermination, par le terminal mobile (130) sur la base du second identifiant dans le signal radio et des seconds identifiants de la pluralité de dispositifs publicitaires (120), que le signal radio est un signal radio qui est diffusé par l'un quelconque de la pluralité de dispositifs publicitaires (120).

7. Procédé selon la revendication 1 ou 2, dans lequel avant l'obtention, par le terminal mobile (130), d'un premier identifiant et d'informations d'orientation et d'emplacement d'un dispositif publicitaire (120) le procédé comprend également :
l'envoi, par le serveur (110), d'informations de dispositif d'une pluralité de dispositifs publicitaires à surveiller (120) au terminal mobile (130), dans lequel les informations de dispositif de la pluralité de dispositifs publicitaires (120) comprennent des premiers identifiants et des informations d'orientation et d'emplacement de la pluralité de dispositifs publicitaires (120) ; et
la réception, par le terminal mobile (130), des informations de dispositif de la pluralité de dispositifs publicitaires (120) à partir du serveur (110), et le stockage des informations de dispositif de la pluralité de dispositifs publicitaires (120) ; et
l'obtention, par le terminal mobile (130), d'un premier identifiant et d'informations d'orientation et d'emplacement d'un dispositif publicitaire (120) comprend :
l'obtention, par le terminal mobile (130), à partir des informations de dispositif de la pluralité de dispositifs publicitaires (120) sur la base des informations d'emplacement en temps réel, du premier identifiant et des informations d'orientation et d'emplacement du dispositif publicitaire (120) dont la distance par rapport au terminal mobile (130) se trouve dans la plage de distance prédéfinie.

8. Procédé de collecte de statistiques concernant des données d'exposition, dans lequel le procédé comprend :
la collecte, par un terminal mobile (130), d'informations d'emplacement en temps réel du terminal mobile (130), dans lequel les informations d'emplacement en temps réel sont utilisées pour déterminer un emplacement et une direction de mouvement du terminal mobile (130) ;
l'obtention, par le terminal mobile (130), d'un premier identifiant et d'informations d'orientation et d'emplacement d'un dispositif publicitaire (120), dans lequel les informations d'orientation et d'emplacement sont utilisées pour indiquer un emplacement et une orientation du dispositif publicitaire (120) ;
la collecte, par le terminal mobile (130), de statistiques concernant une première durée d'exposition du dispositif publicitaire (120) pour le terminal mobile (130), dans lequel la première durée d'exposition est une durée pendant laquelle une orientation et un emplacement du terminal mobile (130) par rapport au dispositif publicitaire (120) satisfont à une condition prédéfinie, et le fait que l'orientation et l'emplacement du terminal mobile (130) par rapport au dispositif publicitaire (120) satisfont à la condition prédéfinie comprend : une distance entre le terminal mobile (130) et le dispositif publicitaire (120) se trouve dans une plage de distance prédéfinie, le terminal mobile (130) est situé d'un côté de l'orientation du dispositif publicitaire (120), et un angle inclus entre la direction de mouvement du terminal mobile (130) et l'orientation du dispositif publicitaire (120) se situe dans une plage d'angle inclus prédéfinie ; et
l'envoi, par le terminal mobile (130), de données d'exposition du dispositif publicitaire (120) à un serveur (110) lorsque la première durée d'exposition est supérieure à une durée d'exposition prédéfinie, dans lequel les données d'exposition comprennent le premier identifiant du dispositif publicitaire (120) et un identifiant du terminal mobile (130), et l'identifiant du terminal mobile (130) correspond à un utilisateur qui utilise le terminal mobile (130), dans lequel
les données d'exposition sont utilisées par le serveur (110) pour collecter des statistiques concernant un trafic d'exposition et une audience du dispositif publicitaire (120), le trafic d'exposition est une quantité d'utilisateurs qui ont été en mesure de regarder une publicité électronique diffusée par le dispositif publicitaire (120), et l'audience est un groupe de personnes qui ont regardé la publicité électronique.

9. Procédé selon la revendication 8, dans lequel les données d'exposition comprennent également la première durée d'exposition ; et
la première durée d'exposition est utilisée par le serveur (110) pour collecter des statistiques concernant la durée pendant laquelle l'utilisateur regarde la publicité électronique diffusée par le dispositif publicitaire (120).

10. Procédé selon la revendication 8 ou 9, dans lequel l'obtention, par le terminal mobile (130), d'un premier identifiant et d'informations d'orientation et d'emplacement d'un dispositif publicitaire (120) comprend :
l'obtention, par le terminal mobile (130), d'un signal radio à partir du dispositif publicitaire (120), dans lequel le signal radio comprend le premier identifiant et les informations d'orientation et d'emplacement du dispositif publicitaire (120) ; et
l'obtention, par le terminal mobile (130), du premier identifiant et des informations d'orientation et d'emplacement du dispositif publicitaire (120) sur la base du signal radio.

11. Procédé selon la revendication 10, dans lequel le signal radio comprend également un identifiant d'une publicité électronique étant diffusée par le dispositif publicitaire (120), et les données d'exposition comprennent également l'identifiant de la publicité électronique ; et
les données d'exposition sont utilisées par le serveur (110) pour collecter des statistiques concernant un trafic d'exposition et une audience de la publicité électronique.

12. Procédé selon la revendication 10 ou 11, dans lequel le procédé comprend également :
la réception, par le terminal mobile (130), d'informations de dispositif d'une pluralité de dispositifs publicitaires à surveiller (120) à partir du serveur (110), et le stockage des informations de dispositif de la pluralité de dispositifs publicitaires (120), dans lequel les informations de dispositif de la pluralité de dispositifs publicitaires (120) comprennent des premiers identifiants de la pluralité de dispositifs publicitaires (120) ; et
avant la collecte, par le terminal mobile (130), de statistiques concernant une première durée d'exposition du dispositif publicitaire (120) pour le terminal mobile (130), le procédé comprend également :
la détermination, par le terminal mobile (130) sur la base du premier identifiant dans le signal radio et des premiers identifiants de la pluralité de dispositifs publicitaires (120), que le signal radio est un signal radio qui est diffusé par l'un quelconque de la pluralité de dispositifs publicitaires (120).

13. Procédé selon la revendication 10 ou 11, dans lequel le signal radio comprend également un second identifiant du dispositif publicitaire (120) ; et le procédé comprend également :
la réception, par le terminal mobile (130), d'informations de dispositif d'une pluralité de dispositifs publicitaires à surveiller (120) à partir du serveur (110), et le stockage des informations de dispositif de la pluralité de dispositifs publicitaires (120), dans lequel les informations de dispositif de la pluralité de dispositifs publicitaires (120) comprennent des seconds identifiants de la pluralité de dispositifs publicitaires (120), le second identifiant est un identifiant de réseau radio ou des informations de préfixe d'un identifiant de réseau radio, et les informations de préfixe sont constituées des N premiers caractères de l'identifiant de réseau radio, dans lequel N ≥ 2, et N est un entier positif ; et
avant la collecte, par le terminal mobile (130), de statistiques concernant une première durée d'exposition du dispositif publicitaire (120) pour le terminal mobile (130), le procédé comprend également :
la détermination, par le terminal mobile (130) sur la base du second identifiant dans le signal radio et des seconds identifiants de la pluralité de dispositifs publicitaires (120), que le signal radio est un signal radio qui est diffusé par l'un quelconque de la pluralité de dispositifs publicitaires (120).

14. Système publicitaire, dans lequel le système comprend un dispositif publicitaire (120), un terminal mobile (130) et un serveur (110), dans lequel
le terminal mobile (130) est configuré pour : collecter des informations d'emplacement en temps réel du terminal mobile (130), dans lequel les informations d'emplacement en temps réel sont utilisées pour déterminer un emplacement et une direction de mouvement du terminal mobile (130) ; obtenir un premier identifiant et des informations d'orientation et d'emplacement du dispositif publicitaire (120), dans lequel les informations d'orientation et d'emplacement sont utilisées pour indiquer un emplacement et une orientation du dispositif publicitaire (120) ; collecter des statistiques concernant une première durée d'exposition du dispositif publicitaire (120) pour le terminal mobile (130) ; et envoyer des données d'exposition du dispositif publicitaire (120) au serveur (110) lorsque la première durée d'exposition est supérieure à une durée d'exposition prédéfinie, dans lequel les données d'exposition comprennent le premier identifiant du dispositif publicitaire (120) et un identifiant du terminal mobile (130), et l'identifiant du terminal mobile (130) correspond à un utilisateur qui utilise le terminal mobile (130) ; et la première durée d'exposition est une durée pendant laquelle une orientation et un emplacement du terminal mobile (130) par rapport au dispositif publicitaire (120) satisfont à une condition prédéfinie, et le fait que l'orientation et l'emplacement du terminal mobile (130) par rapport au dispositif publicitaire (120) satisfont à la condition prédéfinie comprend : une distance entre le terminal mobile (130) et le dispositif publicitaire (120) se situe dans une plage de distance prédéfinie, le terminal mobile (130) est situé d'un côté de l'orientation du dispositif publicitaire (120), et un angle inclus entre la direction de mouvement du terminal mobile (130) et l'orientation du dispositif publicitaire (120) se trouve dans une plage d'angle inclus prédéfinie ; et
le serveur (110) est configuré pour : recevoir les données d'exposition à partir d'une pluralité de terminaux mobiles (130), et collecter des statistiques concernant un trafic d'exposition et une audience du dispositif publicitaire (120) sur la base des données d'exposition reçues, dans lequel le trafic d'exposition est une quantité d'utilisateurs qui ont été en mesure de regarder une publicité électronique diffusée par le dispositif publicitaire (120), et l'audience est un groupe de personnes qui ont regardé la publicité électronique.

15. Système selon la revendication 14, dans lequel le dispositif publicitaire (120) est configuré pour diffuser un signal radio, dans lequel le signal radio comprend le premier identifiant et les informations d'orientation et d'emplacement du dispositif publicitaire (120) ; et
le terminal mobile (130) est également configuré pour :
obtenir le signal radio du dispositif publicitaire (120) par écoute, et obtenir le premier identifiant et les informations d'orientation et d'emplacement du dispositif publicitaire (120) sur la base du signal radio.
